# EUROPEAN PATENT APPLICATION

(11) **EP 4 408 057 A1**
(43) Date of publication of application: **31.07.2024**
(21) Application number: 22894503.6
(22) Date of filing: 08.10.2022
(51) Int. Cl.: H04W 24/02, H04W 84/06

(54) **COMMUNICATION METHOD AND APPARATUS**

(30) Priority: 16.11.2021 CN 202111357236
(71) Applicant: Huawei Technologies Co., Ltd., Shenzhen, Guangdong 518129 (CN)
(72) Inventor: ZHANG, Yanping, Shenzhen, Guangdong 518129 (CN); ZHANG, Chengchen, Shenzhen, Guangdong 518129 (CN)
(74) Representative: Isarpatent
(86) International application number: PCT/CN2022/123915
(87) International publication number: WO 2023/087965

(57) **Abstract**

A communication method and apparatus are provided, to reduce a communication service delay in a satellite communication scenario and improve user experience. A session management function network element determines that a user plane function network element and an access network device that serve a PDU session of a terminal device are deployed on a same satellite. The session management function network element sends first session management information to the access network device, or sends second session management information to the user plane function network element. The first session management information includes first session information, and the first session information indicates the user plane function network element to process a context of the PDU session. The second session management information includes second session information and third session information, the second session information indicates the terminal device to process the context of the PDU session, and the third session information indicates the access network device to process the context of the PDU session. In this way, less communication is performed between devices on a satellite and the ground, so that a communication delay is reduced.

## Description

### CROSS-REFERENCE TO RELATED APPLICATIONS

This application claims priority to Chinese Patent Application No. 202111357236.7, filed with the China National Intellectual Property Administration on November 16, 2021, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

At present, satellite communication has gradually become a research hotspot. Satellite communication can be complementarily used in scenarios, for example, deserts and oceans, that terrestrial communication is difficult to cover. In a satellite communication scenario, network elements originally located on the ground may be deployed on a satellite. For example, in a possible deployment manner, an access network device and a user plane function network element are deployed on the satellite. In this deployment manner, a device on the satellite and a device on the ground need to frequently communicate with each other, which may cause a relatively long communication service delay, and therefore affect user experience.

### SUMMARY

This application provides a communication method and apparatus, to reduce a communication service delay in a satellite communication scenario and improve user experience.

According to a first aspect, this application provides a communication method. The method may include: A session management function network element determines that a user plane function network element and an access network device that serve a protocol data unit (protocol data unit, PDU) session of a terminal device are deployed on a same satellite. Then the session management function network element sends first session management information to the access network device, or the session management function network element sends second session management information to the user plane function network element, where the first session management information includes first session information. The session management function network element is deployed on a ground side. The first session information indicates the user plane function network element to process a context of the PDU session. The second session management information includes second session information and third session information, the second session information indicates the terminal device to process the context of the PDU session, and the third session information indicates the access network device to process the context of the PDU session.

According to the foregoing method, the access network device sends the first session management information to the user plane function network element, and the access network device and the user plane function network element are deployed on a same satellite. In this way, compared with the conventional technology, the session management function network element does not need to send the first session management information to the user plane function network element, so that transmission between the session management function network element and the user plane function network element can be reduced. Alternatively, the session management function network element sends the third session information of the access network device and the second session information of the terminal device by using the second session management information. In this way, an access and mobility management function network element does not need to send the third session information to the access network device and the second session information to the terminal device. Compared with the conventional technology, transmission between the access and mobility management function network element and the access network device can be reduced. Therefore, transmission between a device on a satellite and a device on the ground can be reduced, so that a service delay is reduced, and user experience is improved.

In a possible design, that a session management function network element determines that a user plane function network element and an access network device that serve a PDU session of a terminal device are deployed on a same satellite may be implemented as follows: The session management function network element receives first information from the access and mobility management function network element, where the first information indicates that the user plane function network element and the access network device that serve the PDU session of the terminal device are deployed on a same satellite. Further, the session management function network element determines, based on the first information, that the user plane function network element and the access network device that serve the PDU session of the terminal device are deployed on a same satellite. In this way, the session management function network element can accurately determine that the user plane function network element and the access network device are deployed on a same satellite, to subsequently reduce transmission between a device on a satellite and a device on the ground.

In a possible design, the first information may include one or more of the following: indication information indicating that the access network device and the user plane function network element are independently deployed on a same satellite, indication information indicating that the access network device and the user plane function network element are co-deployed on a same satellite, information about satellites on which the access network device and the user plane function network element are located, and information about the access network device or information about the user plane function network element.

In a possible design, before the session management function network element sends the first session management information to the access network device, the session management function network element may further receive first capability information from the user plane function network element, where the first capability information indicates that the user plane function network element supports a capability of reducing interaction between the user plane function network element and the session management function network element. In this way, the session management function network element can subsequently send the first session management information to the access network device, to reduce transmission between the session management function network element and the user plane function network element and reduce a communication delay.

In a possible design, the first session management information may further include the information about the user plane function network element. In this way, the access network device can accurately send the first session information to the user plane function network element based on the information about the user plane function network element.

In a possible design, the first session management information may further include signaling reduction indication information, and the signaling reduction indication information indicates the access network device to send the first session information to the user plane function network element. In this way, the access network device can accurately send the first session information to the user plane function network element.

In a possible design, after the session management function network element sends the first session management information to the access network device, the session management function network element may further receive second information from the access network device, where the second information indicates that the user plane function network element has completed processing the context of the PDU session and the access network device has completed processing the context of the PDU session. In this way, information that the user plane function network element has completed processing the context of the PDU session can be transmitted to the session management function network element via the access network device, so that transmission between the session management function network element and the user plane function network element is reduced.

In a possible design, after the session management function network element sends the second session management information to the user plane function network element, the session management function network element may further receive, from the user plane function network element, notification information indicating that the access network device has completed processing the context of the PDU session. In this way, information that the access network device has completed processing the context of the PDU session can be transmitted to the session management function network element via the user plane function network element, and the access and mobility management function network element does not need to obtain the information from the access network device and then send the information to the session management function network element, so that transmission between the access and mobility management function network element and the access network device is reduced.

In a possible design, after the session management function network element sends the second session management information to the user plane function network element, the session management function network element may further receive, from the user plane function network element, notification information indicating that the terminal device has completed processing the context of the PDU session. In this way, information that the terminal device has completed processing the context of the PDU session can be transmitted to the session management function network element via the user plane function network element, and the access and mobility management function network element does not need to obtain the information from the access network device and then send the information to the session management function network element, so that transmission between the access and mobility management function network element and the access network device is reduced.

According to a second aspect, this application provides a communication method. The method may include: An access network device receives first session management information from a session management function network element, where the first session management information includes first session information, and sends the first session information to a user plane function network element, where the first session information indicates the user plane function network element to process a context of a PDU session of a terminal device, the user plane function network element and the access network device are deployed on a same satellite, and the session management function network element is deployed on a ground side.

According to the foregoing method, the access network device sends the first session information to the user plane function network element. Compared with the conventional technology, the session management function network element does not need to send the first session information to the user plane function network element, so that transmission between the session management function network element and the user plane function network element can be reduced. Therefore, transmission between a device on a satellite and a device on the ground can be reduced, so that a service delay is reduced, and user experience is improved.

In a possible design, the access network device may further send second capability information to an access and mobility management function network element, where the second capability information indicates that the access network device supports signaling interaction with the user plane function network element. In this way, the access network device can subsequently send the first session information to the user plane function network element.

In a possible design, the first session management information may further include information about the user plane function network element. In this way, the access network device can accurately send the first session information to the user plane function network element based on the information about the user plane function network element.

In a possible design, the first session management information may further include signaling reduction indication information, and the signaling reduction indication information indicates the access network device to send the first session information to the user plane function network element. In this way, the access network device can accurately send the first session information to the user plane function network element.

In a possible design, the access network device may further receive third information from the user plane function network element, where the third information indicates that the user plane function network element has completed processing the context of the PDU session. Further, the access network device sends second information to the session management function network element, where the second information indicates that the user plane function network element has completed processing the context of the PDU session and the access network device has completed processing the context of the PDU session. In this way, information that the user plane function network element has completed processing the context of the PDU session can be transmitted to the session management function network element via the access network device, so that transmission between the session management function network element and the user plane function network element is reduced.

According to a third aspect, this application provides a communication method. The method may include: A user plane function network element receives second session management information from a session management function network element, where the second session management information includes second session information and third session information. The user plane function network element sends the second session information and the third session information to an access network device, where the second session information indicates a terminal device to process a context of a PDU session, and the third session information indicates the access network device to process the context of the PDU session. The user plane function network element and the access network device are deployed on a same satellite, and the session management function network element is deployed on a ground side.

According to the foregoing method, the session management function network element sends the third session information of the access network device and the second session information of the terminal device by using the second session management information. In this way, an access and mobility management function network element does not need to send the third session information to the access network device and the second session information to the terminal device. Compared with the conventional technology, transmission between the access and mobility management function network element and the access network device can be reduced. Therefore, transmission between a device on a satellite and a device on the ground can be reduced, so that a service delay is reduced, and user experience is improved.

In a possible design, before the user plane function network element receives the second session management information from the session management function network element, the user plane function network element may further send first capability information to the session management function network element, where the first capability information indicates that the user plane function network element supports a capability of reducing interaction between the user plane function network element and the session management function network element. In this way, the session management function network element can subsequently reduce transmission between the session management function network element and the user plane function network element, to reduce a communication delay.

In a possible design, the user plane function network element may further send, to the session management function network element, notification information indicating that the access network device has completed processing the context of the PDU session. In this way, information that the access network device has completed processing the context of the PDU session can be transmitted to the session management function network element via the user plane function network element, and the access and mobility management function network element does not need to obtain the information from the access network device and then send the information to the session management function network element, so that transmission between the access and mobility management function network element and the access network device is reduced.

In a possible design, the user plane function network element may further send, to the session management function network element, notification information indicating that the terminal device has completed processing the context of the PDU session. In this way, information that the terminal device has completed processing the context of the PDU session can be transmitted to the session management function network element via the user plane function network element, and the access and mobility management function network element does not need to obtain the information from the access network device and then send the information to the session management function network element, so that transmission between the access and mobility management function network element and the access network device is reduced.

According to a fourth aspect, this application provides a communication method. The method may include: An access and mobility management function network element sends first information to a session management function network element, where the first information indicates that a user plane function network element and an access network device that serve a protocol data unit PDU session of a terminal device are deployed on a same satellite. In this way, the session management function network element can accurately determine, based on the first information, that the user plane function network element and the access network device are deployed on a same satellite, to subsequently reduce transmission between the session management function network element and the user plane function network element, or reduce transmission between the access and mobility management function network element and the access network device.

In a possible design, the first information may include one or more of the following: indication information indicating that the access network device and the user plane function network element are independently deployed on a same satellite, indication information indicating that the access network device and the user plane function network element are co-deployed on a same satellite, information about satellites on which the access network device and the user plane function network element are located, and information about the access network device or information about the user plane function network element.

In a possible design, before sending the first information to the session management function network element, the access and mobility management function network element may further receive second capability information from the access network device, where the second capability information indicates that the access network device supports signaling interaction with the user plane function network element. In this way, signaling interaction between the access network device and the user plane function network element can be subsequently implemented.

According to a fifth aspect, this application further provides a communication apparatus. The communication apparatus may be a session management function network element, and the communication apparatus has a function of implementing the method in the first aspect or the possible design examples of the first aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. The units may perform corresponding functions in the first aspect or the possible design examples of the first aspect. For details, refer to detailed descriptions in the method examples. Details are not described herein again.

In a possible design, a structure of the communication apparatus includes a communication interface and a processor, and optionally, further includes a memory. The communication interface is configured to send and receive data, a message, information, or the like, and is configured to communicate and interact with another device in a communication system. The processor is configured to support the communication apparatus in performing a corresponding function in the first aspect or the possible design examples of the first aspect. The memory is coupled to the processor, and stores program instructions and data that are necessary for the communication apparatus.

According to a sixth aspect, this application further provides a communication apparatus. The communication apparatus may be an access network device, and the communication apparatus has a function of implementing the method in the second aspect or the possible design examples of the second aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. The units may perform corresponding functions in the second aspect or the possible design examples of the second aspect. For details, refer to detailed descriptions in the method examples. Details are not described herein again.

In a possible design, a structure of the communication apparatus includes a communication interface and a processor, and optionally, further includes a memory. The communication interface is configured to send and receive data, a message, information, or the like, and is configured to communicate and interact with another device in a communication system. The processor is configured to support the communication apparatus in performing a corresponding function in the second aspect or the possible design examples of the second aspect. The memory is coupled to the processor, and stores program instructions and data that are necessary for the communication apparatus.

According to a seventh aspect, this application further provides a communication apparatus. The communication apparatus may be a user plane function network element, and the communication apparatus has a function of implementing the method in the third aspect or the possible design examples of the third aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. The units may perform corresponding functions in the third aspect or the possible design examples of the third aspect. For details, refer to detailed descriptions in the method examples. Details are not described herein again.

In a possible design, a structure of the communication apparatus includes a communication interface and a processor, and optionally, further includes a memory. The communication interface is configured to send and receive data, a message, information, or the like, and is configured to communicate and interact with another device in a communication system. The processor is configured to support the communication apparatus in performing a corresponding function in the third aspect or the possible design examples of the third aspect. The memory is coupled to the processor, and stores program instructions and data that are necessary for the communication apparatus.

According to an eighth aspect, this application further provides a communication apparatus. The communication apparatus may be an access and mobility management function network element, and the communication apparatus has a function of implementing the method in the fourth aspect or the possible design examples of the fourth aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. The units may perform corresponding functions in the fourth aspect or the possible design examples of the fourth aspect. For details, refer to detailed descriptions in the method examples. Details are not described herein again.

In a possible design, a structure of the communication apparatus includes a communication interface and a processor, and optionally, further includes a memory. The communication interface is configured to send and receive data, a message, information, or the like, and is configured to communicate and interact with another device in a communication system. The processor is configured to support the communication apparatus in performing a corresponding function in the fourth aspect or the possible design examples of the fourth aspect. The memory is coupled to the processor, and stores program instructions and data that are necessary for the communication apparatus.

According to a ninth aspect, an embodiment of this application provides a communication system, and the communication system may include the foregoing terminal device, access network device, user plane function network element, session management function network element, access and mobility management function network element, and the like.

According to a tenth aspect, an embodiment of this application provides a computer-readable storage medium. The computer-readable storage medium stores program instructions. When the program instructions run on a computer, the computer is enabled to perform the method in any one of the first aspect and the possible designs of the first aspect, any one of the second aspect and the possible designs of the second aspect, any one of the third aspect and the possible designs of the third aspect, or any one of the fourth aspect and the possible designs of the fourth aspect in embodiments of this application. For example, the computer-readable storage medium may be any usable medium accessible to the computer. By way of example instead of limitation, the computer-readable medium may include a non-transient computer-readable medium, a random access memory (random-access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can be used to carry or store expected program code in a form of an instruction or a data structure and can be accessed by the computer.

According to an eleventh aspect, an embodiment of this application provides a computer program product, including instructions. When the instructions run on a computer, the method in any one of the first aspect or the possible designs of the first aspect, any one of the second aspect or the possible designs of the second aspect, any one of the third aspect and the possible designs of the third aspect, or any one of the fourth aspect and the possible designs of the fourth aspect is performed.

According to a twelfth aspect, this application further provides a chip, including a processor. The processor is coupled to a memory, and is configured to read and execute program instructions stored in the memory, so that the chip implements the method in any one of the first aspect or the possible designs of the first aspect, any one of the second aspect or the possible designs of the second aspect, any one of the third aspect and the possible designs of the third aspect, or any one of the fourth aspect and the possible designs of the fourth aspect.

For each of the fifth aspect to the twelfth aspect and technical effects that can be achieved by each aspect, refer to descriptions of technical effects that can be achieved by the first aspect or the possible solutions of the first aspect, the second aspect or the possible solutions of the second aspect, the third aspect and the possible solutions of the third aspect, or the fourth aspect and the possible solutions of the fourth aspect. Details are not described herein again.

### BRIEF DESCRIPTION OF DRAWINGS

FIG. 1 is a schematic diagram of an architecture of a communication system according to this application;
FIG. 2 is a schematic diagram of a deployment manner of satellite communication according to this application;
FIG. 3 is a flowchart of a communication method according to this application;
FIG. 4 is a flowchart of another communication method according to this application;
FIG. 5A and FIG. 5B are a flowchart of an example of a communication method according to this application;
FIG. 6A and FIG. 6B are a flowchart of an example of another communication method according to this application;
FIG. 7A and FIG. 7B are a flowchart of an example of a communication method according to this application;
FIG. 8A and FIG. 8B are a flowchart of an example of another communication method according to this application;
FIG. 9A and FIG. 9B are a flowchart of an example of a communication method according to this application;
FIG. 10A and FIG. 10B are a flowchart of an example of another communication method according to this application;
FIG. 11A and FIG. 11B are a flowchart of an example of a communication method according to this application;
FIG. 12A and FIG. 12B are a flowchart of an example of another communication method according to this application;
FIG. 13A and FIG. 13B are a flowchart of an example of another communication method according to this application;
FIG. 14 is a schematic diagram of a structure of a communication apparatus according to this application; and
FIG. 15 is a diagram of a structure of a communication apparatus according to this application.

### DESCRIPTION OF EMBODIMENTS

The following further describes in detail this application with reference to the accompanying drawings.

Embodiments of this application provide a communication method and apparatus, to reduce a communication service delay in a satellite communication scenario and improve user experience. The method and the apparatus in this application are based on a same technical concept. Because problem-resolving principles of the method and the apparatus are similar, mutual reference may be made to implementations of the apparatus and the method, and repeated parts are not described again.

In the descriptions of this application, terms such as "first" and "second" are only for distinction and description, but cannot be understood as indicating or implying relative importance, or as indicating or implying an order.

In the descriptions of this application, "at least one" means one or more, and "a plurality of" means two or more. "At least one of the following items" or a similar expression thereof means any combination of these terms, including any combination of one or more of the items. For example, at least one of a, b, or c may indicate a, b, c, a and b, a and c, b and c, or a, b, and c, where a, b, and c may be singular or plural.

In the descriptions of this application, "and/or" describes an association relationship between associated objects and represents that three relationships may exist. For example, A and/or B may represent the following cases: Only A exists, both A and B exist, and only B exists, where A and B may be singular or plural. "/" indicates "or". For example, a/b indicates a or b.

To describe the technical solutions in embodiments of this application more clearly, the following describes the communication method and apparatus provided in embodiments of this application in detail with reference to the accompanying drawings.

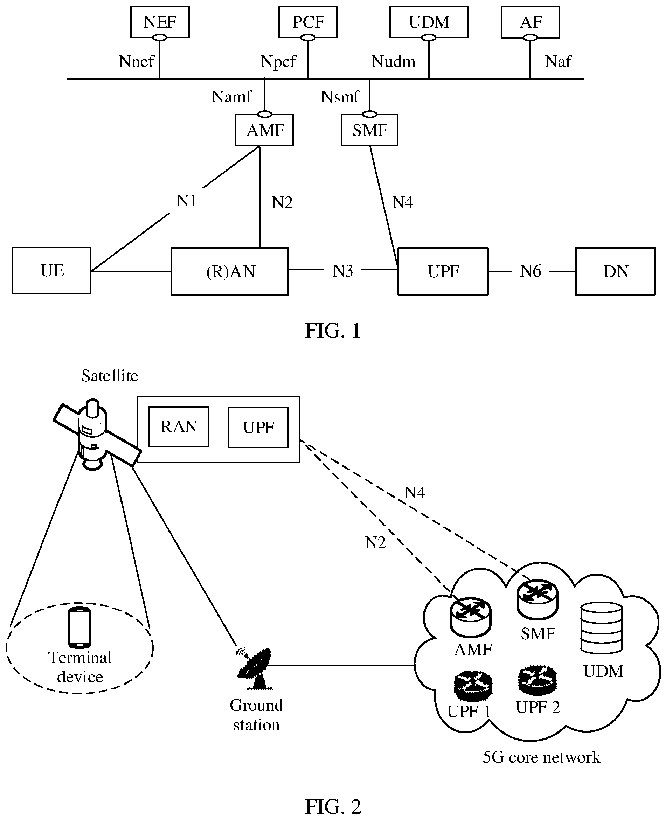

FIG. 1 shows an architecture of a possible communication system to which a communication method provided in this application is applicable. The architecture of the communication system may include a radio access network, a terminal device, and a core network. For example, in the architecture of the communication system, the radio access network may include an access network device. The core network may include a network exposure function (network exposure function, NEF) network element, a policy control function (policy control function, PCF) network element, a unified data management (unified data management, UDM) network element, an application function (application function, AF) network element, an access and mobility management function (access and mobility management function, AMF) network element, a session management function (session management function, SMF) network element, and a user plane function (user plane function, UPF) network element. The AMF network element may be connected to the access network device through an N2 interface, the access network device may be connected to the UPF through an N3 interface, the SMF may be connected to the UPF through an N4 interface, and the AMF network element may be connected to the UE through an N1 interface. Interface names are merely examples for description. This is not specifically limited in embodiments of this application. It should be understood that embodiments of this application are not limited to the communication system shown in FIG. 1. Names of the network elements shown in FIG. 1 are merely used as examples for description herein, and are not construed as limitations on the network elements included in the architecture of the communication system to which the method in this application is applicable. The following describes functions of the network elements or the devices in the communication system in detail.

The terminal device may also be referred to as user equipment (user equipment, UE), a mobile station (mobile station, MS), a mobile terminal (mobile terminal, MT), or the like, and is a device that provides voice and/or data connectivity for a user. For example, the terminal device may include a handheld device, a vehicle-mounted device, or the like that has a wireless connection function. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. The terminal device in FIG. 1 is shown as UE, and the UE is merely used as an example, and does not limit the terminal device.

A (R)AN device is a device that provides access for the terminal device, and includes a radio access network (radio access network, AN) device and an access network (access network, AN) device. The RAN device is mainly a wireless network device in a 3GPP network, and the AN may be an access network device defined by non-3GPP. The RAN device is mainly responsible for functions such as radio resource management, quality of service (quality of service, QoS) management, and data compression and encryption on an air interface side. The access network device may include base stations in various forms, for example, a macro base station, a micro base station (also referred to as a small cell), a relay station, and an access point. In systems using different radio access technologies, names of devices having a base station function may be different. For example, in a 5th generation (the 5th generation, 5G) system, the device is referred to as a RAN, a gNB (5G NodeB), or the like.

The access and mobility management function network element may be configured to manage access control and mobility of the terminal device. In actual application, the access and mobility management function network element includes a mobility management function in a mobility management entity (mobility management entity, MME) in a network framework of long term evolution (long term evolution, LTE), and includes an access management function. The access and mobility management function network element may be specifically responsible for registration, mobility management, a tracking area update procedure, reachability detection, selection of a session management function network element, mobility status transition management, and the like of the terminal device. For example, in 5G, the access and mobility management function network element may be an AMF network element, for example, as shown in FIG. 1. In future communication, for example, in 6G, the access and mobility management function network element may still be an AMF network element or have another name. This is not limited in this application. When the access and mobility management function network element is an AMF network element, the AMF may provide an Namf service.

The session management function network element may be configured to be responsible for session management (including session establishment, modification, and release, and maintenance of a tunnel between the user plane function network element and the access network device) of the terminal device, selection and reselection of the user plane function network element, internet protocol (internet protocol, IP) address assignment (including optional authorization) of the terminal device, traffic routing configuration in the user plane function network element, quality of service (quality of service, QoS) control, and the like. The session management function network element is a session management termination point of a non-access stratum (non-access stratum, NAS) message. For example, in 5G, the session management function network element may be an SMF network element, for example, as shown in FIG. 1. In future communication, for example, in 6G, the session management function network element may still be an SMF network element or have another name. This is not limited in this application. When the session management function network element is an SMF network element, the SMF may provide an Nsmf service.

The user plane function network element is responsible for forwarding and receiving user data in the terminal device. The user plane function network element may receive user data from a data network, and transmit the user data to the terminal device via the access network device. The UPF network element may further receive user data from the terminal device via the access network device, and forward the user data to the data network. A transmission resource and a scheduling function that are used by the UPF network element to serve the terminal device are managed and controlled by the SMF network element. For example, in 5G, the user plane function network element may be a UPF network element, for example, as shown in FIG. 1. In future communication, for example, in 6G, the user plane function network element may still be a UPF network element or have another name. This is not limited in this application.

The policy control function network element mainly supports provision of a unified policy framework to control a network behavior and provision of a policy rule for a control layer network function, and is also responsible for obtaining user subscription information related to a policy decision. For example, in 5G, the policy control function network element may be a PCF network element, for example, as shown in FIG. 1. In future communication, for example, in 6G, the policy control function network element may still be a PCF network element or have another name. This is not limited in this application. When the policy control function network element is a PCF network element, the PCF network element may provide an Npcf service.

The network exposure function network element mainly supports secure interaction between a 3GPP network and a third-party application. For example, in 5G, the network exposure function network element may be a NEF network element, for example, as shown in FIG. 1. In future communication, for example, in 6G, the network exposure function network element may still be a NEF network element or have another name. This is not limited in this application. When the network exposure function network element is a NEF, the NEF may provide an Nnef service for another network function network element.

The application function network element mainly supports interaction with a 3GPP core network to provide services, for example, application influence on traffic routing decision, policy control functions, or provision of some third-party services for a network side. For example, in 5G, the application function network element may be an AF network element, for example, as shown in FIG. 1. In future communication, for example, in 6G, the application function network element may still be an AF network element or have another name. This is not limited in this application. When the application function network element is an AF network element, the AF network element may provide a Naf service.

The unified data management network element is configured for generation of authentication credentials, user identification handling (for example, storage and management of a user permanent identity), access authorization control, subscription data management, and the like. For example, in 5G, the unified data management network element may be a UDM network element, for example, as shown in FIG. 1. In future communication, for example, in 6G, the unified data management network element may still be a UDM network element or have another name. This is not limited in this application. When the unified data management network element is a UDM network element, the UDM network element may provide an Nudm service.

The data network (data network, DN) is a service network that provides a data transmission service for users, for example, an IP multimedia service (IP multimedia service, IMS) network or the internet (Internet).

The UE accesses the DN by using a protocol data unit (protocol data unit, PDU) session established between the UE and the DN.

Network elements in the core network may also be referred to as function entities or devices, and may be network elements implemented on dedicated hardware, or may be software instances running on dedicated hardware, or may be instances of virtualized functions on a suitable platform. For example, the virtualization platform may be a cloud platform.

It should be noted that the communication system shown in FIG. 1 does not constitute any limitation on a communication system to which embodiments of this application are applicable. The architecture of the communication system shown in FIG. 1 is a 5G system architecture. Optionally, the method in embodiments of this application is further applicable to various future communication systems such as 6G or another communication network.

It should be noted that the architecture of the communication system shown in FIG. 1 is not limited to including only the network elements shown in the figure, and may further include another device not shown in the figure. Details are not described in this application.

It should be noted that a distribution form of the network elements is not limited in embodiments of this application. The distribution form shown in FIG. 1 is merely an example, and is not limited in this application.

For ease of description, the network elements shown in FIG. 1 are used as examples for subsequent descriptions of this application, and an XX network element is directly referred to as XX. For example, the SMF network element is referred to as an SMF. It should be understood that names of all network elements in this application are merely used as examples, and may also be referred to as other names in future communication, or the network element in this application may be replaced by another entity or device that has a same function in future communication. This is not limited in this application. Unified descriptions are provided herein, and details are not described below again.

It should be noted that names of all messages or information in this application are merely used as examples, and all the messages or the information may have other names. The message may be information, and the information may be a message. This is not limited in this application. It should be understood that a message or information from a network element 1 to a network element 2 may be a message or information directly or indirectly sent by the network element 1 to the network element 2. For example, the network element 1 first sends a message or information to the network element 3, the network element 3 then sends the message or the information to the network element 2, and finally the message or the information is sent to the network element 2 via one or more network elements.

Currently, a satellite communication technology can be complementarily used in scenarios, for example, deserts and oceans, that terrestrial communication is difficult to cover. In a satellite communication scenario, some network elements originally located on the ground may be deployed on a satellite. For example, a possible deployment manner of satellite communication may be shown in FIG. 2. In FIG. 2, user plane network elements, for example, a RAN and a UPF, that serve a PDU session executed by a terminal device may be deployed on a satellite. The terminal device accesses a 5G core network through the satellite. A ground station is responsible for forwarding signaling and service data between the satellite and the 5G core network. It should be noted that in the foregoing scenario, a UPF may also be deployed on the ground, for example, a UPF 1 and a UPF 2 shown in the 5G core network located on the ground in FIG. 2. It should be understood that the network elements or the devices shown in FIG. 2 are merely examples, and are not construed as a limitation on this application.

In this deployment manner, a device on the satellite and a device on the ground need to frequently communicate with each other. Because the satellite is relatively far away from the ground, a communication service delay may be relatively long, and therefore, user communication experience is affected. Based on this, embodiments of this application provide a communication method, to reduce a quantity of times of information exchange between a device on a satellite and a device on the ground, thereby reducing a communication delay and improving user experience.

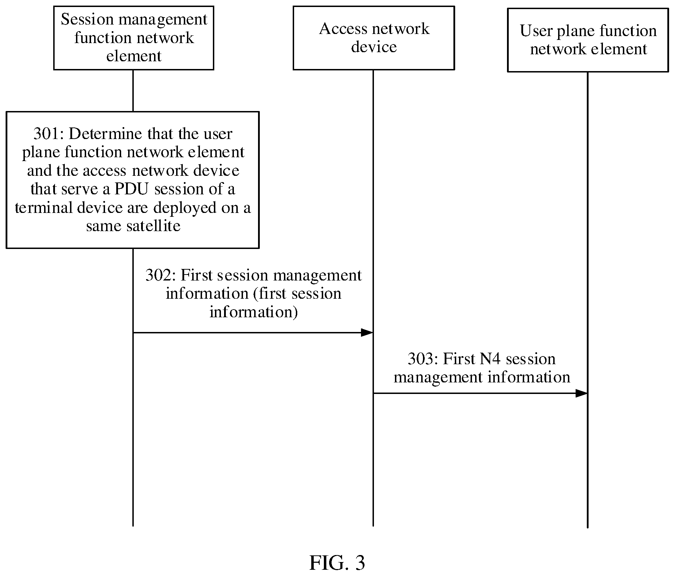

Based on the foregoing descriptions, as shown in FIG. 3, an embodiment of this application provides a communication method. In a scenario to which the method is applied, both an access network device and a user plane function network element may be deployed on a same satellite, and a session management function network element may be deployed on a ground side. A specific procedure may include the following steps.

Step 301: The session management function network element determines that the user plane function network element and the access network device that serve a PDU session of a terminal device are deployed on a same satellite.

For example, the session management function network element may receive first information from an access and mobility management function network element, where the first information indicates that the user plane function network element and the access network device that serve the PDU session of the terminal device are deployed on a same satellite. Therefore, the session management function network element may determine, based on the first information, that the user plane function network element and the access network device that serve the PDU session of the terminal device are deployed on a same satellite.

For example, the first information may include one or more of the following: indication information indicating that the access network device and the user plane function network element are independently deployed on a same satellite, indication information indicating that the access network device and the user plane function network element are co-deployed on a same satellite, information about satellites on which the access network device and the user plane function network element are located, and information about the access network device or information about the user plane function network element.

The first information may also be referred to as co-located (co-located) user plane information or another name. A name of the first information is not limited in this application.

It should be noted that the indication information indicating that not both the indication information indicating that the access network device and the user plane function network element are independently deployed on a same satellite and the indication information indicating that the access network device and the user plane function network element are co-deployed on a same satellite are included in the first information. When the access network device and the user plane function network element are independently deployed on a same satellite, the access network device and the user plane function network element may exchange signaling via a current N3 interface (the current N3 interface can only be used to transmit a data packet between the access network device and the user plane function network element, but cannot transmit signaling between the access network device and the user plane function network element). When the access network device and the user plane function network element are co-deployed on a same satellite, interaction between the access network device and the user plane function network element is internally implemented.

The information about the satellites on which the access network device and the user plane function network element are located may be identifiers of the satellites on which the access network device and the user plane function network element are located, information about orbits of the satellites, or the like.

The information about the access network device may be an identifier or the like of the access network device.

The information about the user plane function network element may be an identifier, an address, or the like of the user plane function network element.

In an example implementation, the session management function network element may determine, based on the first information by using the following several methods, that the user plane function network element and the access network device that serve the PDU session of the terminal device are deployed on a same satellite:

Method 1: The session management function network element may perform determining based on the indication information indicating that the access network device and the user plane function network element are independently deployed on a same satellite or the indication information indicating that the access network device and the user plane function network element are co-deployed on a same satellite, where the two pieces of indication information are included in the first information.

Method 2: When the first information includes the information about the user plane function network element, the session management function network element determines, with reference to a local configuration and the information about the user plane function network element, that the user plane function network element and the access network device are deployed on a same satellite.

Method 3: When the first information includes the information about the access network device, the session management function network element determines, with reference to a local configuration or information that is about the user plane function network element co-deployed with the access network device and that is obtained from another network element (for example, the AMF or a UDM), that the user plane function network element and the access network device are deployed on a same satellite.

Method 4: When the first information includes the information about the satellites on which the access network device and the user plane function network element are located, the session management function network element may determine that the information about the satellites on which the access network device and the user plane function network element are located is the same, to determine that the user plane function network element and the access network device are deployed on a same satellite.

It should be understood that in addition to the foregoing methods, the session management function network element may determine, by using another method, that the user plane function network element and the access network device are deployed on a same satellite. For example, the access network device serving the terminal device provides, for the session management function network element, the information about the user plane function network element deployed on a same satellite as the access network device, so that the session management function network element determines, based on the information about the user plane function network element deployed on a same satellite as the access network device, the information about the access network device, and the like that are provided by the access network device, that the access network device and the user plane function network element are deployed on a same satellite. A method for determining that the user plane function network element and the access network device are deployed on a same satellite is not limited in this application.

In an optional implementation, when the access and mobility management function network element sends the first information to the session management function network element, in a session establishment procedure, the access and mobility management function network element may send a session management context creation request message to the session management function network element after receiving an uplink NAS message that includes a PDU session establishment request message and that is sent by the terminal device, where the session management context creation request message includes the first information and the PDU session establishment request message. Alternatively, in a PDU session modification procedure, the access and mobility management function network element may send the first information to the session management function network element when the terminal device initiates PDU session modification. Alternatively, in a PDU session release procedure, the access and mobility management function network element may send the first information to the session management function network element. Alternatively, the access and mobility management function network element sends the first information in a session establishment procedure, and the access and mobility management function network element also sends the first information in a subsequent PDU session modification procedure and/or PDU session release procedure. This is not limited in this application.

It should be noted that in this application, when the access network device is located on a satellite, some or all of modules included in the access network device may be located on the satellite, and some or all of functional modules included in the user plane function network element may be located on the satellite on which the access network device is located.

Optionally, before step 301, when selecting the user plane function network element that serves the PDU session of the terminal device, the session management function network element may select a user plane function network element deployed on a same satellite as the access network device that serves the PDU session of the terminal device, to serve the PDU session.

Step 302: The session management function network element sends first session management information to the access network device, where the first session management information includes first session information, and the first session information indicates the user plane function network element to process a context of the PDU session.

Optionally, the first session management information may be transmitted to the access network device through an N2 interface. Therefore, the first session management information may be referred to as first N2 session management information. For ease of description, in the following descriptions, the first session management information is described by using the first N2 session management information.

Optionally, session information sent to the user plane function network element may reach the user plane function network element through an N4 interface. The session information sent to the user plane function network element is usually referred to as N4 session management information. Therefore, the first session information in this application may be referred to as first N4 session management information. For ease of description, in the following descriptions, the first session information is described by using the first N4 session management information.

However, in this embodiment of this application, the first session management information and the first session information may alternatively have other message names, and any message with notification functions of the first session management information and the first session information falls within the protection scope of this application.

The context of the PDU session may also be referred to as a context of an N4 session. Indicating the user plane function network element to process the context of the PDU session may be indicating the user plane function network element to create (configure), update, and remove (release) the context of the N4 session, and may be further indicating the user plane function network element to process a resource such as a tunnel, or the like.

In an optional implementation, the first N4 session management information may be referred to as an N4 transparent transmission container. To be specific, the first N4 session management information is sent by the session management function network element to the user plane function network element, and network elements such as the access and mobility management function network element and the access network device in the sending process transparently transmit the information. In the session establishment procedure, the first N4 session management information may be an N4 session establishment request message, and is used by the user plane function network element to create the context of the N4 session, for example, configure various N4 rules. In the PDU session modification procedure, the first N4 session management information may be an N4 session modification request message, and is used by the user plane function network element to update the context of the N4 session, for example, update various N4 rules. In the PDU session release procedure, the first N4 session management information may be an N4 session release request message, and is used by the user plane function network element to remove the context of the N4 session, for example, remove various N4 rules.

In an optional implementation, before sending the first session management information to the access network device, the session management function network element may further receive first capability information from the user plane function network element, where the first capability information indicates that the user plane function network element supports a capability of reducing interaction between the user plane function network element and the session management function network element.

Optionally, the user plane function network element may send the first capability information to the session management function network element in an N4 association establishment procedure. The first capability information may also be referred to as signaling optimization support indication information, user plane signaling support indication information, or another name. This is not limited in this application. For example, when the user plane function network element sends the first capability information, if the access network device and the user plane function network element are independently deployed on a same satellite, it indicates that the user plane function network element supports signaling interaction with the access network device; or if the access network device and the user plane function network element are co-deployed on a same satellite, it indicates that the user plane function network element supports internal interaction with the access network.

In this way, the session management function network element can accurately send the first session management information to the access network device, to avoid the following problem: When the user plane function network element does not support the capability of reducing interaction between the user plane function network element and the session management function network element, the session management function network element blindly sends the first session management information to the access network device. Consequently, communication overheads of a device on a satellite and a device on the ground cannot be reduced, and a waste of transmission resources caused by sending an invalid message is caused.

In another optional implementation, before the session management function network element sends the first session management information to the access network device, the access network device may also send second capability information to the access and mobility management function network element, where the second capability information indicates that the access network device supports signaling interaction with the user plane function network element.

Optionally, the access network device may send the second capability information to the access and mobility management function network element in a next generation (next generation, NG) interface establishment procedure. The second capability information may also be referred to as user plane signaling support indication information or another name. For example, when the access network device sends the second capability information, if the access network device and the user plane function network element are independently deployed on a same satellite, it indicates that the user plane function network element supports signaling interaction with the access network device; or if the access network device and the user plane function network element are co-deployed on a same satellite, it indicates that the user plane function network element supports internal interaction with the access network.

In this way, the session management function network element can also accurately send the first session management information to the access network device, to avoid the following problem: When the access network device and the user plane function network element located on a same satellite do not support an interaction capability, the session management function network element blindly sends the first session management information to the access network device. Consequently, communication overheads of a device on the satellite and a device on the ground cannot be reduced, and a waste of transmission resources caused by sending an invalid message is caused.

Step 303: The access network device sends the first N4 session management information to the user plane function network element.

In an optional implementation, the first N2 session management information may further include signaling reduction indication information, and the signaling reduction indication information indicates the access network device to send the first N4 session management information to the user plane function network element.

In an optional implementation, the first N2 session management information may further include the information about the user plane function network element. In this way, the access network device can accurately send the first N4 session management information to the user plane function network element based on the information about the user plane function network element.

In a possible implementation, when the access network device and the user plane function network element that serve the PDU session of the terminal device are deployed on a same satellite, the user plane function network element may not allocate a core network tunnel in the PDU session establishment procedure. Further, the first N2 session management information may not include core network tunnel information in the session establishment procedure or the PDU session modification procedure. In addition, in the PDU session establishment procedure, when the first N2 session management information does not include the core network tunnel information, the access network device may not allocate an access network tunnel, either.

In another optional manner, in the PDU session establishment procedure, when the access network device determines that the access network device and the user plane function network element are deployed on a same satellite, the access network device may not allocate an access network tunnel. For example, if the first N2 session management information includes the information about the user plane function network element, the access network device may determine that the user plane function network element corresponding to the PDU session is deployed on a same satellite as the access network device.

In still another optional manner, when the first N2 session management information further includes the signaling reduction indication information, the access network device may not allocate an access network tunnel.

After the user plane function network element completes processing the context of the PDU session of the terminal device, the access network device may further receive third information from the user plane function network element, where the third information indicates that the user plane function network element has completed processing the context of the PDU session. Then, after the access network device also completes processing the context of the PDU session of the terminal device, the access network device may further send second information to the session management function network element, where the second information indicates that the user plane function network element has completed processing the context of the PDU session and the access network device has completed processing the context of the PDU session. For example, the second information indicates establishment, modification, release, or the like performed by the access network device and the user plane function network element for the PDU session, including that a tunnel between the access network device and the user plane function network element has been processed, established, released, or the like.

For example, in the PDU session establishment procedure, if the access network device and the user plane function network element are co-deployed on a same satellite, the access network device and the user plane function network element may complete user plane path configuration through internal implementation. If the access network device and the user plane function network element are independently deployed on a same satellite, the access network device may send information about an allocated access network tunnel to the user plane function network element, and the user plane function network element updates a forwarding rule and the like. When the access network device and the user plane function network element are independently deployed on a same satellite, an interface, a message, and the like used for exchanging signaling between the access network device and the user plane function network element are not limited in this application. For example, the signaling may be sent by using a user-defined data packet.

In an optional implementation, the third information may be first N4 session response information sent by the user plane function network element to the access network device, and is a response to the first N4 session management information. In other words, the first N4 session response information is sent by the user plane function network element to the session management function network element. The second information may be first N2 session response information sent by the access network device to the session management function network element, and is a response to the first N2 session management information.

In a possible manner, because the third information indicates that the user plane function network element has completed processing the context of the PDU session, and the second information indicates that the user plane function network element has completed processing the context of the PDU session and the access network device has completed processing the context of the PDU session, it may be understood that the second information includes the third information. For example, the first N2 session response information includes the first N4 session response information.

In another optional implementation, the third information may be a result of processing the context of the PDU session that is sent by the user plane function network element to the access network device, to indicate that the user plane function network element has completed processing the context of the PDU session, and the result of processing the context of the PDU session is sent by the user plane function network element to the access network device. The second information may be first N2 session response information sent by the access network device to the session management function network element, and is a response to the first N2 session management information including the foregoing result information. It should be noted that the result information sent by the access network device to the session management function network element is based on the result information received from the user plane function network element, and the two pieces of result information may be represented in a same manner or different manners.

According to the communication method provided in this embodiment of this application, the access network device sends the first N4 session management information to the user plane function network element, and the access network device and the user plane function network element are deployed on a same satellite. In this way, compared with the conventional technology, the session management function network element does not need to send the first N4 session management information to the user plane function network element, so that transmission between the session management function network element and the user plane function network element can be reduced. Therefore, transmission between a device on a satellite and a device on the ground is reduced, so that a service delay is reduced, and user experience is improved.

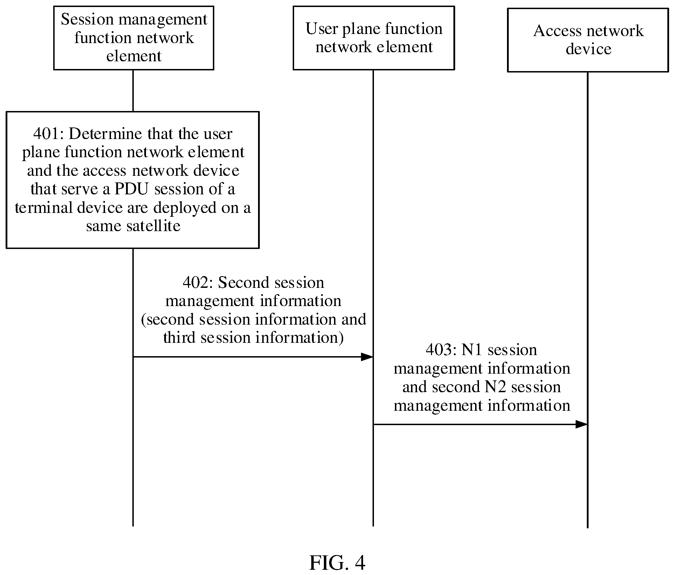

As shown in FIG. 4, an embodiment of this application provides another communication method. In a scenario to which the method is applied, both an access network device and a user plane function network element may also be deployed on a same satellite device, and a session management function network element may be deployed on a ground side. A specific procedure of the method may include the following steps.

Step 401: The session management function network element determines that the user plane function network element and the access network device that serve a PDU session of a terminal device are deployed on a same satellite.

Specifically, for a specific implementation process of step 401, refer to related descriptions in step 301 in the embodiment shown in FIG. 3. Details are not described herein again.

Step 402: The session management function network element sends second session management information to the user plane function network element, where the second session management information includes second session information and third session information, the second session information indicates the terminal device to process a context of the PDU session, and the third session information indicates the access network device to process the context of the PDU session.

Optionally, the second session management information may reach the user plane function network element through an N4 interface. Therefore, the second session management information may also be referred to as second N4 session management information. For ease of description, in the following descriptions, the second session management information is described by using the second N4 session management information.

Optionally, session information sent to the access network device may reach the access network device through an N2 interface. The session information sent to the access network device may be usually referred to as N2 session management information. Therefore, the third session information in this application may also be referred to as second N2 session management information. For ease of description, in the following descriptions, the third session information is described by using the second N2 session management information. Similarly, currently, a session sent to the terminal device may reach the terminal device through an N1 interface. Session information sent to the terminal device may be usually referred to as N1 session management information. Therefore, the second session information in this application may be referred to as N1 session management information. For ease of description, in the following descriptions, the second session information is described by using N1 session management information.

However, in this embodiment of this application, the second session management information, the second session information, and the third session information may alternatively have other message names, and any message with notification functions of the second session management information, the second session information, and the third session information falls within the protection scope of this application.

The N1 session management information may include a message/information related to the PDU session, or the N1 session management information is a message/information related to the PDU session, for example, a PDU session establishment accept message, a PDU session modification command message, or a PDU session release command message. Further, in an example in which the terminal device processes the context of the PDU session, after receiving the PDU session establishment accept message, the terminal device may determine that a network has accepted session establishment, and process the PDU session based on a parameter in the PDU session establishment accept message, for example, send a data packet based on a quality of service (quality of service, QoS) parameter granted by the network.

The second N2 session management information may also include a message/information related to the PDU session, or the second N2 session management information is a message/information related to the PDU session, for example, tunnel information or QoS information. For example, in an example in which the access network device processes the context of the PDU session, after receiving the tunnel information, the access network device may use the tunnel information as an uplink termination point of user plane data of the PDU session.

Optionally, the N1 session management information may be referred to as an N1 transparent transmission container. To be specific, the N1 session management information is sent by the session management function network element to the terminal device, and all network elements such as an access and mobility management function network element and the access network device in the sending process transparently transmit the information. Similarly, the second N2 session management information may be referred to as an N2 transparent transmission container. To be specific, the second N2 session management information may be sent by the session management function network element to the access network device, and all network elements such as the access and mobility management function network element in the sending process transparently transmit the information.

In an optional implementation, before the session management function network element sends the second session management information to the user plane function network element, the access network device may first send second capability information to the access and mobility management function network element, where the second capability information indicates that the access network device supports signaling interaction with the user plane function network element. Optionally, the access network device may send the second capability information to the access and mobility management function network element in an NG establishment procedure. The second capability information may also be referred to as user plane signaling support indication information or another name. For example, when the access network device sends the second capability information, if the access network device and the user plane function network element are independently deployed on a same satellite, it indicates that the user plane function network element supports signaling interaction with the access network device; or if the access network device and the user plane function network element are co-deployed on a same satellite, it indicates that the user plane function network element supports internal interaction with the access network. Further, optionally, the access and mobility management function network element may send the second capability information to the session management function network element.

In another optional manner, before the session management function network element sends the second session management information to the user plane function network element, the access network device may send the second capability information to the access and mobility management function network element when forwarding a PDU session establishment request message of the terminal device to the access and mobility management function network element. When receiving the second capability information from the access network device, the access and mobility management function network element may transparently transmit the second capability information to the session management function network element when forwarding the PDU session establishment request message to the session management function network element.

In this way, the session management function network element can accurately send the second session management information to the user plane function network element, to avoid the following problem: When the user plane function network element does not support a capability of interaction with the access network device, the session management function network element blindly sends first session management information to the user plane function network element. Consequently, communication overheads of a device on a satellite and a device on the ground cannot be reduced, and a waste of transmission resources caused by sending an invalid message is caused.

Step 403: The user plane function network element sends the N1 session management information and the second N2 session management information to the access network device.

Then the access network device sends the N1 session management information to the terminal device.

In a possible manner, when the access network device and the user plane function network element are co-deployed on a same satellite, the user plane function network element may send the N1 session management information and the second N2 session management information to the access network device through internal implementation.

In another possible manner, when the access network device and the user plane function network element are independently deployed on a same satellite, the user plane function network element may send the N1 session management information and the second N2 session management information to the access network device by using signaling.

In an optional implementation, the second N2 session management information may not include core network tunnel information.

In an optional implementation, after completing processing the context of the PDU session, the access network device may send, to the user plane function network element, an indication indicating that processing the context of the PDU session is completed. For example, completing processing the context of the PDU session by the access network device includes completing resource allocation, completing resource update, completing resource release, or the like. Further, the user plane function network element sends, to the session management function network element, notification information indicating that the access network device has completed processing the context of the PDU session.

In an optional implementation, after completing processing the context of the PDU session, the terminal device may send a context processing indication of the PDU session to the user plane function network element via the access network device. Further, the user plane function network element sends, to the session management function network element, notification information indicating that the terminal device has completed processing the context of the PDU session.

According to the communication method provided in this embodiment of this application, the session management function network element sends the N2 session management information of the access network device and the N1 session management information of the terminal device by using the N4 session management information. In this way, the access and mobility management function network element does not need to send the N2 session management information and the N1 session management information of the terminal device to the access network device. In this way, compared with the conventional technology, transmission between the access and mobility management function network element and the access network device can be reduced, so that transmission between a device on a satellite and a device on the ground is reduced, thereby reducing a service delay and improving user experience.

Based on the foregoing embodiments, the following describes the communication method provided in embodiments of this application in detail by using specific examples. In the following examples, an example in which the terminal device is UE, the session management function network element is an SMF, the user plane function network element is a UPF, the access network device is a RAN, and the access and mobility management function network element is an AMF is used for detailed description.

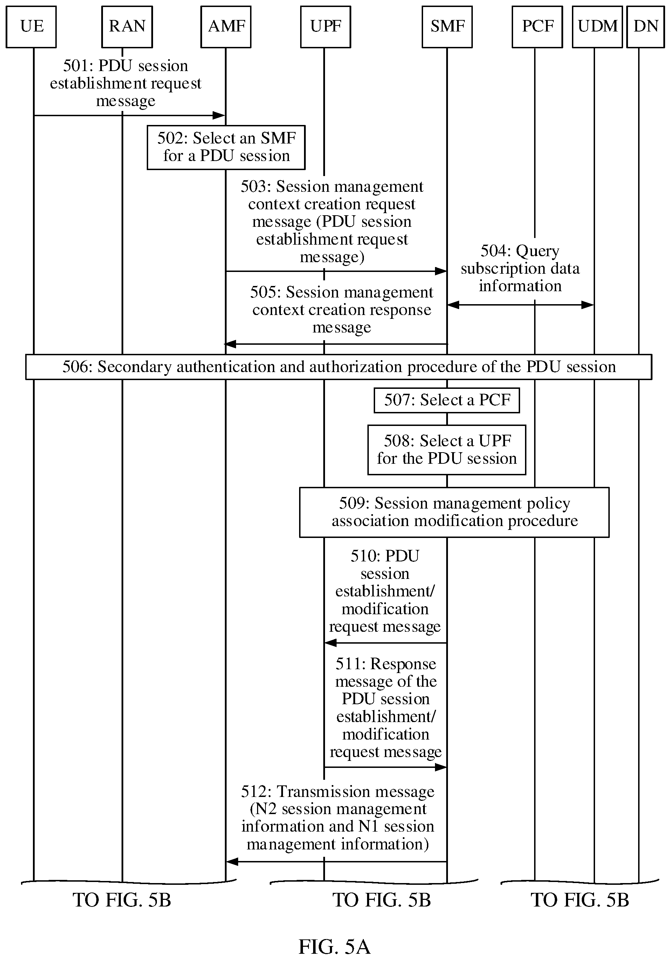

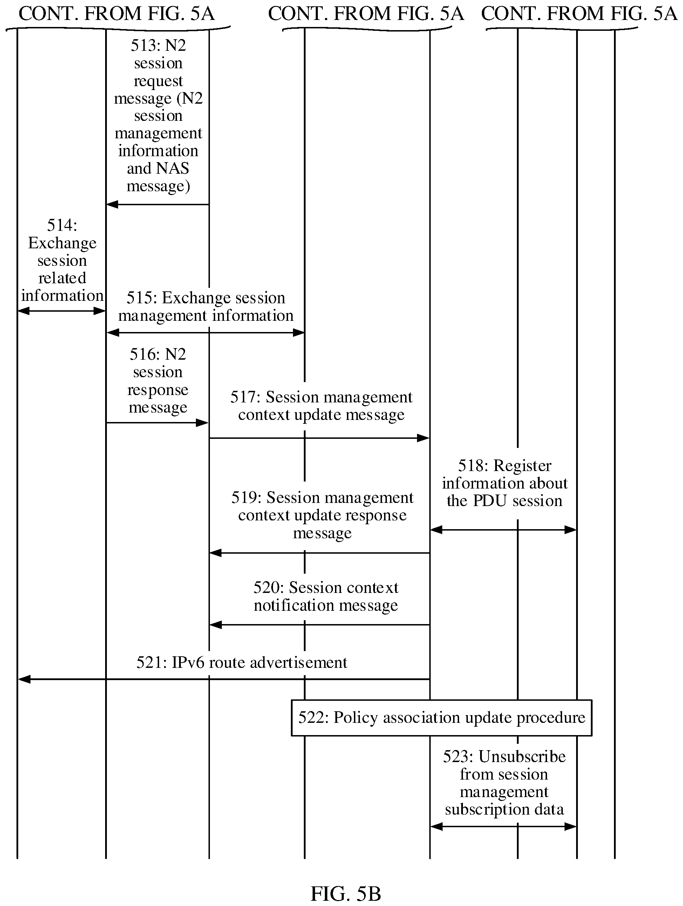

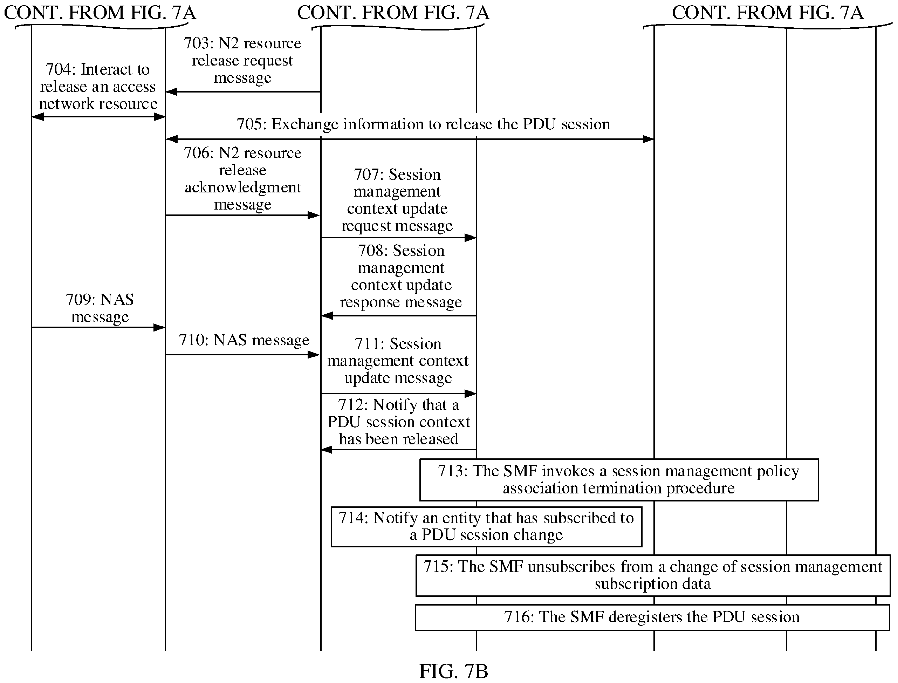

In a scenario, if the SMF determines that the UPF and the RAN that serve a PDU session of the UE are deployed on a same satellite, the SMF does not configure, update, or delete a rule, a resource, or the like on the UPF. The following uses examples shown in FIG. 5A and FIG. 5B to FIG. 7A and FIG. 7B for description. The following examples shown in FIG. 5A and FIG. 5B to FIG. 7A and FIG. 7B are described by using an example in which the UPF and the RAN that serve the PDU session of the UE are deployed on a same satellite and the SMF is deployed on a ground side.

FIG. 5A and FIG. 5B show an example of a communication method. In this example, the communication method provided in this embodiment of this application is described in detail with reference to a session establishment procedure. A specific procedure of the example may include the following steps.

Step 501: UE sends a PDU session establishment request message to an AMF; and sends, to the AMF, an uplink NAS transmission message including the PDU session establishment request message.

Step 502: The AMF selects an SMF for a PDU session.

Step 503: The AMF forwards the PDU session establishment request message to the SMF, where the AMF may include the PDU session establishment request message in a session management context creation request message. Optionally, the session management context creation request message includes co-located (co-located) user plane information (namely, the foregoing first information).

For content included in the co-located user plane information, refer to related descriptions of the foregoing first information. Details are not described herein again.

The SMF may determine, based on the co-located user plane information provided by the AMF, that a RAN and a UPF that serve the UE are deployed on a same satellite. For a specific manner of determining performed by the SMF, refer to related descriptions in step 301 in the foregoing embodiment. Details are not described herein again.

Step 504: Optionally, if the SMF needs to obtain subscription data information, the SMF queries the subscription data information in a UDM.

Step 505: If the SMF can process the PDU session establishment request message, the SMF sends a session management context creation response message to the AMF, where the session management context creation response message includes a session context identifier.

Step 506: If the SMF needs to perform a secondary authentication and authorization procedure, the SMF triggers a secondary authentication and authorization procedure of the PDU session.

Step 507: If a dynamic policy needs to be used for the PDU session, the SMF performs a PCF selection operation. Optionally, the SMF initiates a session management policy establishment procedure.

Step 508: The SMF selects a UPF for the PDU session. Optionally, when selecting a UPF, the SMF considers the co-located user plane information provided by the AMF, in other words, preferentially selects a UPF deployed on a same satellite as the RAN that serves the UE.

Step 509: Optionally, the SMF initiates a session management policy association modification procedure.

Step 510: If the PDU session is established for the first time, the SMF initiates an N4 session establishment procedure, and the SMF sends a PDU session establishment request message to the UPF. If the PDU session is re-established for an existing PDU session, the SMF initiates an N4 session modification procedure, and the SMF sends a PDU session modification request message to the UPF. The SMF includes a data packet detection rule, a QoS execution rule, a reporting rule, and the like in the request message.

Step 511: In the N4 session establishment procedure or the N4 session modification procedure, the UPF allocates a core network tunnel (CN tunnel) to the PDU session, and provides core network tunnel information for the SMF in a response message of the PDU session establishment request message or the PDU session modification request message.

A procedure named an N4 association establishment procedure may be involved in initial configuration. A function of supporting interaction between the SMF and the UPF in the procedure is not shown in the example diagram of this embodiment. Optionally, in the N4 association establishment procedure, the UPF sends signaling optimization support indication information (namely, the foregoing first capability information) to the SMF. The signaling optimization support indication information indicates that the UPF supports reduction of signaling between the SMF and the UPF. For a scenario in which the RAN and the UPF are independently deployed on a same satellite, the signaling optimization support indication information indicates that the UPF supports signaling interaction with the RAN. For a scenario in which the RAN and the UPF are co-deployed on a same satellite, the signaling optimization support indication information indicates that internal signaling interaction exists between the UPF and the RAN. A name of the signaling optimization support indication information is not limited in this application. For example, the signaling optimization support indication information may alternatively be user plane signaling support indication information.

Another procedure named an NG establishment procedure may also exist in initial configuration. A function of supporting interaction between the AMF and the RAN in the procedure is not shown in the example diagram of this embodiment. Optionally, in the NG establishment procedure, the RAN sends user plane signaling support indication information (namely, the foregoing second capability information) to the AMF, and the user plane signaling support indication information indicates that user plane signaling interaction is supported between the RAN and the UPF. For a scenario in which the RAN and the UPF are independently deployed on a same satellite, the user plane signaling support indication information indicates that the RAN supports signaling interaction with the UPF. For a scenario in which the RAN and the UPF are co-deployed on a same satellite, the user plane signaling support indication information indicates that internal signaling interaction exists between the UPF and the RAN. Optionally, if the AMF receives the user plane signaling support indication information, the AMF may send the user plane signaling support indication information to the SMF in step 502.

In an optional manner, when forwarding the PDU session establishment request message of the UE to the AMF in step 501, the RAN sends the user plane signaling support indication information to the AMF. After receiving the user plane signaling support indication information from the RAN, the AMF transparently transmits the user plane signaling support indication information to the SMF in step 503.

In a possible implementation, if the co-located user plane information provided by the AMF includes intra-satellite co-deployment indication information (in other words, the RAN and the UPF are co-located on a same satellite), and the UPF selected by the SMF is a UPF deployed on a same satellite as the RAN that serves the UE, the SMF does not initiate the N4 session establishment or modification procedure, in other words, step 510 and step 511 are not performed. Optionally, if the co-located user plane information provided by the AMF includes intra-satellite co-deployment indication information, the UPF selected by the SMF is a UPF deployed on a same satellite as the RAN that serves the UE, and the UPF provides the signaling optimization support indication information for the SMF, step 510 and step 511 are not performed.

In another possible implementation, if the co-located user plane information provided by the AMF includes intra-satellite co-deployment indication information, and the UPF selected by the SMF is a UPF deployed on a same satellite as the RAN that serves the UE, the UPF does not allocate a core network tunnel in step 511. Optionally, in this solution, the SMF indicates the UPF not to allocate a core network tunnel.

Step 512: The SMF sends a transmission message to the AMF, where the transmission message includes N2 session management information, N1 session management information, and the like. The N2 session management information is information sent by the SMF to the RAN, and the N1 session management information is information sent by the SMF to the UE. The N2 session management information includes a PDU session identifier, QoS related information, slice related information, the core network tunnel information, and the like. The N1 session management information includes a PDU session accept message and the like.

If step 510 and step 511 are not performed, or step 510 and step 511 are performed but the UPF does not allocate a core network tunnel in step 511, the N2 session management information does not include the core network tunnel information. Optionally, the N2 session management information includes identification information or address information of the UPF.

Optionally, if the UPF selected by the SMF is a UPF deployed on a same satellite as the RAN that serves the UE, the SMF includes signaling optimization indication information in the N2 session management information, and the signaling optimization indication information indicates the RAN to perform signaling optimization.

Step 513: The AMF sends an N2 session request message to the RAN, where the N2 session request message includes the N2 session management information and a NAS message. The N2 session management information is information sent by the SMF to the RAN. The NAS message includes the PDU session identifier and the N1 session management information. The N1 session management information is information sent by the SMF to the UE.

Step 514: The RAN exchanges session related information with the UE. For example, the RAN sends the N1 session management information to the UE, and the RAN establishes a related resource for the PDU session, and allocates an access network tunnel (AN tunnel) to the PDU session.

In a possible implementation, if the RAN and the UPF are co-deployed on a same satellite, the RAN does not allocate an access network tunnel. Optionally, if the RAN determines that a UPF corresponding to the PDU session is a UPF co-deployed with the RAN, the RAN does not allocate an access network tunnel. Optionally, if the SMF provides a UPF identifier or a UPF address in the N2 session management information, the RAN determines that the UPF corresponding to the PDU session is a UPF co-deployed with the RAN. Certainly, there may be another manner of enabling the RAN to determine a UPF co-deployed with the RAN. This is not limited in this application.

In another possible implementation, if the RAN and the UPF are co-deployed on a same satellite, and the RAN receives the signaling optimization indication information from the SMF, the RAN does not allocate an access network tunnel.

In still another possible implementation, if the N2 session management information received by the RAN does not include the core network tunnel information, the RAN does not allocate an access network tunnel.

Step 515: The RAN and the UPF exchange session management information, for example, access network tunnel information.

Optionally, if the RAN receives the signaling optimization indication information from the SMF, the RAN determines that the RAN needs to exchange the session management information with the UPF.

In a possible implementation, if the RAN and the UPF are co-deployed on a same satellite, the RAN and the UPF complete user plane path configuration through internal implementation. Internal processing of the co-deployed RAN and UPF is not limited in this application.

In another possible implementation, if the RAN and the UPF are independently deployed on a same satellite, the RAN sends the information about the allocated access network tunnel to the UPF, and the UPF updates a forwarding rule and the like. An interface, a message, and the like used for exchanging signaling between the RAN and the UPF are not limited in this application. For example, the signaling may be sent by using a special data packet.

After steps 514 and 515, the UE may send an uplink data packet, and the UPF may send a received downlink data packet to the UE.

Step 516: The RAN sends an N2 session response message to the AMF, where the N2 session response message includes the PDU session identifier, N2 session management response information, and the like. The N2 session management response information is information sent by the RAN to the SMF. The N2 session management response information includes the PDU session identifier, the access network tunnel information, and accepted/rejected QoS information.

In a possible implementation, when the RAN receives the signaling optimization indication information from the SMF, the N2 session management response information does not include the access network tunnel information.

Optionally, if the RAN receives the signaling optimization indication information from the SMF, and has completed interaction with the UPF, the N2 session response message includes UPF configuration complete indication information, to indicate that UPF configuration is completed.

Step 517: The AMF sends a session management context update message to the SMF, where the session management context update message includes the N2 session management response information sent by the RAN to the SMF.

Currently, in a standard procedure, after receiving the access network tunnel information provided by the RAN, the SMF provides the access network tunnel information for the UPF. However, in this application, if the SMF receives the co-located user plane information of the AMF, and the UPF selected by the SMF is a UPF deployed on a same satellite as the RAN that serves the UE, after receiving the N2 session management information of the RAN, the SMF does not perform the operation in the standard procedure, in other words, does not provide the access network tunnel information for the UPF. Therefore, this step is not shown in FIG. 5A and FIG. 5B.

In a possible implementation, if the SMF receives the UPF configuration complete indication information from the RAN, the operation in the standard procedure is not performed.

It should be noted that when the RAN and the UPF are not located on a same satellite, the foregoing standard procedure is still performed.

Step 518: Optionally, the SMF registers information about the PDU session with the UDM.

Step 519: The SMF sends a session management context update response message to the AMF.

Step 520: If the session fails to be established, the SMF sends a session context notification message to the AMF, and indicates to release the session.

It should be noted that step 520 may occur at any time after step 505.

Step 521: When the PDU session is internet protocol version 6 (Internet protocol version 6, IPv6) or IPv4v6, the SMF generates an IPv6 route advertisement, and sends the IPv6 route advertisement to the UE.

Step 522: For some special scenarios, the SMF may need to initiate a policy association update procedure.

Step 523: The SMF may unsubscribe from session management subscription data in the UDM.

It should be noted that step 523 is performed when PDU session establishment fails at a time after step 504.

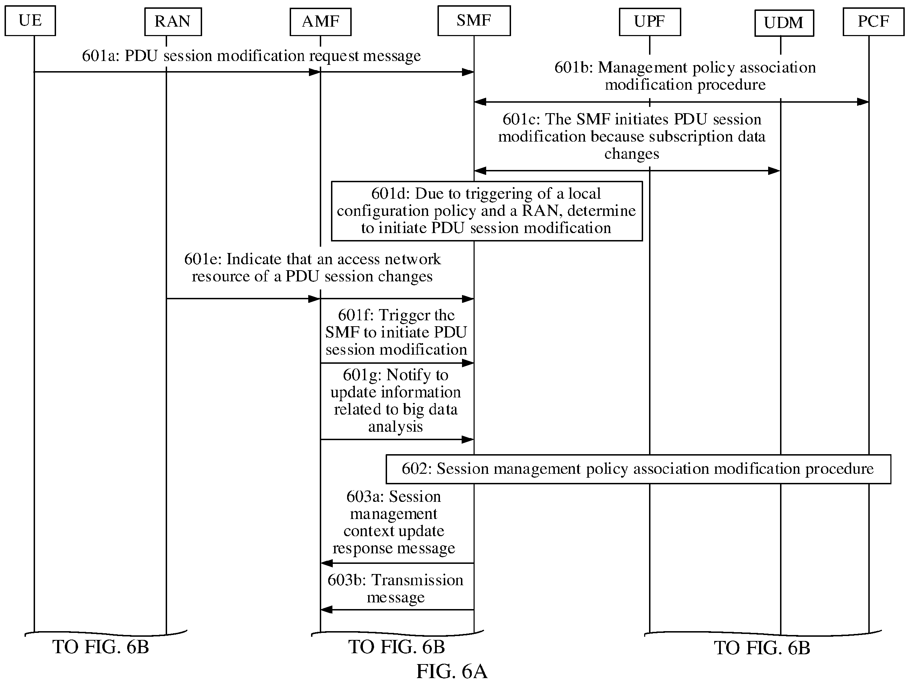

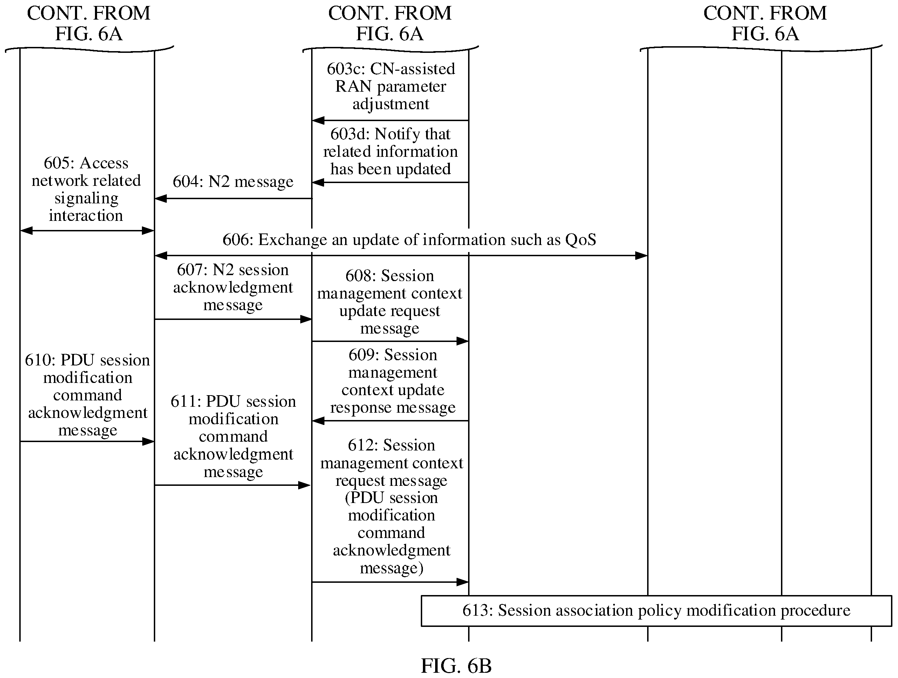

FIG. 6A and FIG. 6B show an example of another communication method. In this example, the communication method provided in this embodiment of this application is described in detail with reference to a PDU session modification procedure. A specific procedure of the example may include the following steps.

A plurality of possible manners of triggering PDU session modification may include step 601a to step 601g.

Step 601a: UE sends a PDU session modification request message to an SMF.

Specifically, the UE sends the PDU session modification request message to the SMF via an AMF. Optionally, in this process, the AMF sends co-located user plane information (namely, the foregoing first information) to the SMF. For content included in the co-located user plane information, refer to related descriptions of the foregoing first information. Details are not described herein again.

Step 601b: A PCF initiates a session management policy association modification procedure.

Step 601c: An SMF initiates PDU session modification because subscription data changes.

Step 601d: Due to triggering of a local configuration policy and a RAN, an SMF may determine to initiate PDU session modification.

Step 601e: A RAN indicates, to an SMF, that an access network resource of a PDU session changes, for example, has been released.

Step 601f: In an internet of things energy saving scenario, an AMF may trigger an SMF to initiate PDU session modification.

Step 601g: An AMF may notify an SMF to update information related to big data analysis.

Step 602: Optionally, the SMF may need to notify the PCF of some events, and the SMF initiates a session management policy association modification procedure.

After step 602, if a UPF used for the PDU session is a UPF deployed on a same satellite as the RAN that serves the UE, the following step 603a to step 603d are directly performed.

In a possible implementation, the SMF determines, based on the co-located user plane information sent by the AMF, that the UPF used for the PDU session is a UPF deployed on a same satellite as the RAN that serves the UE.

In another possible implementation, the SMF determines, in a session establishment process, that the UPF used for the PDU session is a UPF deployed on a same satellite as the RAN that serves the UE, and stores the information.

If the UPF used for the PDU session is not a UPF deployed on a same satellite as the RAN that serves the UE, when the SMF determines to modify the PDU session, the following steps are further performed: The SMF may update an N4 rule related to new or modified QoS (herein, a rule related to uplink data is mainly modified herein), and send an N4 session modification request message to the UPF. After receiving the N4 session modification request message, the UPF updates a corresponding rule. In other words, the foregoing two steps are not performed after the method in this application is used. The two steps are not shown in FIG. 6A and FIG. 6B.

For different manners in step 601a to step 601g, corresponding operations in the following step 603a to step 603d are performed.

Step 603a: For PDU session modification initiated by the UE or the RAN, the SMF sends a session management context update response message to the AMF, where the session management context update response message includes N2 session management information and N1 session management information. The N2 session management information includes a PDU session identifier, QoS information, core network tunnel information, and the like. The N1 session management information includes a PDU session modification command message, and the PDU session modification command message includes the PDU session identifier, the QoS information, and the like.

Optionally, if the UPF does not allocate a core network tunnel in the session establishment process, the N2 session management information does not include the core network tunnel information.

Optionally, if the UPF selected by the SMF is a UPF deployed on a same satellite as the RAN that serves the UE, the SMF includes signaling optimization indication information in the N2 session management information, and the indication information indicates the RAN to perform signaling optimization.

Step 603b: For PDU session modification requested by the SMF, the SMF sends a transmission message to the AMF, where content included in the transmission message is the same as content included in the session management context update response message in step 603a, and reference may be made to each other.

Step 603c: For a scenario in which a parameter associated with the SMF in a UDM changes, namely, the scenario in which the subscription data changes in step 601c, the SMF provides, for the AMF, CN-assisted RAN parameter adjustment derived by the SMF.

Step 603d: For a scenario in which the information related to the big data analysis is updated, the SMF notifies the AMF that the related information has been updated.

Step 604: The AMF sends an N2 message to the RAN, where the N2 message includes the N2 session management information, the N1 session management information, and the like that are from the SMF.

Step 605: The RAN may initiate access network related signaling interaction with the UE. In this process, the RAN sends the N1 session management information to the UE.

Step 606: The RAN and the UPF exchange an update of information such as QoS. For example, the UPF updates an N4 rule related to the QoS, where the N4 rule herein includes an uplink rule, a downlink rule, and the like.

Optionally, if the RAN receives the signaling optimization indication information from the SMF, the RAN determines that the RAN needs to exchange the information such as the QoS with the UPF.

In a possible implementation, if the RAN and the UPF are co-deployed on a same satellite, the RAN and the UPF complete user plane path configuration through internal implementation.

In another possible implementation, if the RAN and the UPF are independently deployed on a same satellite, the RAN indicates the UPF to update a forwarding rule and the like.

Step 607: The RAN sends an N2 session acknowledgment message to the AMF, where the N2 session acknowledgment message includes N2 session management response information, and the N2 session management response information includes accepted/rejected QoS information and the like.

Optionally, if the RAN receives the signaling optimization indication information from the SMF, and has completed interaction with the UPF, the N2 session acknowledgment message includes UPF configuration complete indication information, to indicate that UPF configuration is completed.

Step 608: The AMF sends a session management context update request message to the SMF, where the session management context update request message includes the N2 session management response information sent by the RAN.

Step 609: The SMF sends a session management context update response message to the AMF.

In a manner, if the UPF used for the PDU session is a UPF deployed on a same satellite as the RAN that serves the UE, after the AMF receives the N2 session management response information of the RAN, the following step 610 continues to be performed.

In a possible implementation, the SMF determines, based on the co-located user plane information sent by the AMF, that the UPF used for the PDU session is a UPF deployed on a same satellite as the RAN that serves the UE.

In another possible implementation, the SMF determines, in the session establishment process, that the UPF used for the PDU session is a UPF deployed on a same satellite as the RAN that serves the UE, and stores the information.

In another manner, if the SMF receives the UPF configuration complete indication information from the RAN, the following step 610 continues to be performed.

When the UPF used for the PDU session is a UPF not deployed on a same satellite as the RAN that serves the UE, according to an existing standard procedure, the SMF sends an N4 session modification request message to the UPF, where the N4 session modification request message is for updating a rule related to new, modified, or deleted QoS. A modified rule herein is mainly a rule related to downlink data. In other words, in the communication method provided in this application, the step in the foregoing existing procedure is not performed, and the foregoing step is not shown in FIG. 6A and FIG. 6B.

It should be noted that when the UPF used for the PDU session is a UPF not deployed on a same satellite as the RAN that serves the UE, according to the existing standard procedure, the step of updating the rule by the SMF may be performed after step 612. However, the foregoing step is still not performed when the method in this application is used.

Step 610: If the UE receives a PDU session modification command from the SMF, the UE sends a PDU session modification command acknowledgment message to the SMF. Specifically, the UE first sends the PDU session modification command acknowledgment message to the RAN.

Step 611: The RAN forwards the PDU session modification command acknowledgment message to the AMF.

Step 612: The AMF forwards the PDU session modification command acknowledgment message to the SMF by using a session management context request message.

Step 613: The SMF may initiate a session association policy modification procedure, to notify a policy rule execution status and the like.

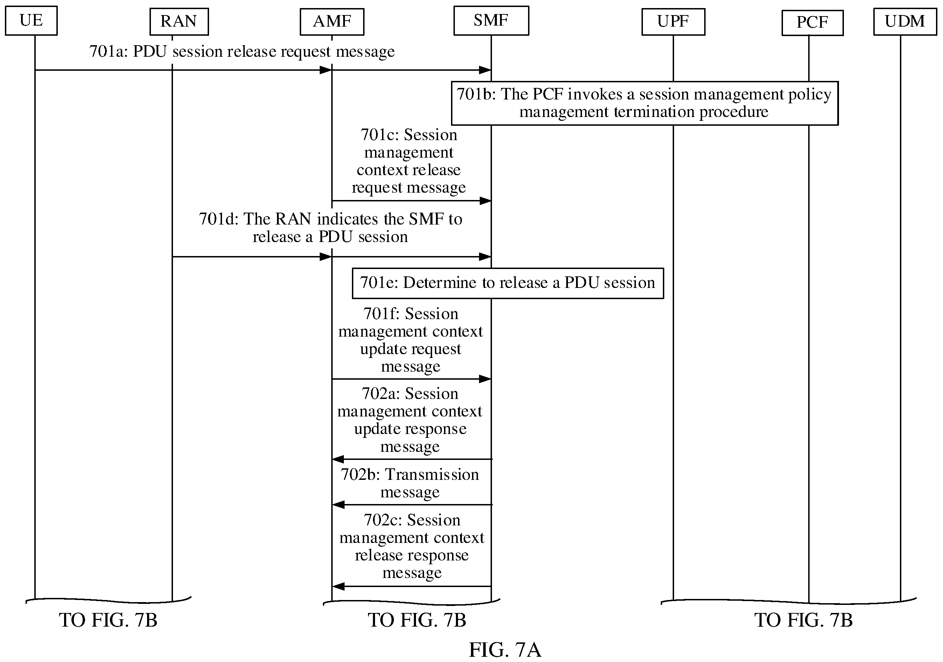

FIG. 7A and FIG. 7B show an example of another communication method. In this example, the communication method provided in this embodiment of this application is described in detail with reference to a PDU session release procedure. A specific procedure of the example may include the following steps.

A plurality of possible manners of triggering PDU session release may include step 701a to step 701f.

Step 701a: UE sends a PDU session release request message to an SMF.

Specifically, the UE sends the PDU session release request message to the SMF via an AMF. Optionally, in this process, the AMF sends co-located user plane information (namely, the foregoing first information) to the SMF. For content included in the co-located user plane information, refer to related descriptions of the foregoing first information. Details are not described herein again.

Step 701b: A PCF may invoke a session management policy management termination procedure.

Step 701c: If statuses of a PDU session between UE and an AMF do not match or in another scenario in which N1 or N2 session management information is not required before a session management context is released, the AMF may send a session management context release request message to an SMF to request the SMF to release the PDU session.

Optionally, in this process, the AMF sends co-located user plane information (namely, the foregoing first information) to the SMF. For content included in the co-located user plane information, refer to related descriptions of the foregoing first information. Details are not described herein again.

Step 701d: A RAN may indicate an SMF to release a PDU session.

Step 701e: An SMF determines to release a PDU session.

Step 701f: In a scenario in which N1 or N2 session management information is required before a session management context is released, an AMF may send a session management context update request message to an SMF to request the SMF to release a PDU session.

Optionally, in this process, the AMF sends co-located user plane information (namely, the foregoing first information) to the SMF. For content included in the co-located user plane information, refer to related descriptions of the foregoing first information. Details are not described herein again.

If a UPF used for the PDU session is a UPF deployed on a same satellite as the RAN that serves the UE, when the SMF determines that the PDU session needs to be released, corresponding steps in the following step 702a to step 702d continue to be performed.

In a possible implementation, the SMF determines, based on the co-located user plane information sent by the AMF, that the UPF used for the PDU session is a UPF deployed on a same satellite as the RAN that serves the UE.

In another possible implementation, the SMF determines, in a session establishment process, that the UPF used for the PDU session is a UPF deployed on a same satellite as the RAN that serves the UE, and stores the information.

In other words, if the UPF used for the PDU session is a UPF not deployed on a same satellite as the RAN that serves the UE, when the SMF determines that the PDU session needs to be released, the following steps are performed according to an existing standard procedure: The SMF sends an N4 session release request message to the UPF. The UPF sends an N4 session release response message to the SMF. After receiving the request, the UPF discards a data packet of the PDU session, and releases a tunnel resource and an N4 session related context. In other words, the foregoing steps are not performed after the method provided in this application is used. The two steps are not shown in FIG. 7A and FIG. 7B.

For different manners in step 701a to step 701f, corresponding operations in the following step 702a to step 702c are performed.

Step 702a: For the scenarios of step 701a, step 701d, and step 701f, the SMF sends a session management context update response message to the AMF, where the session management context update response message includes an N1 session management container (N1 session management information), and optionally includes an N2 resource release request. The N1 session management container is information sent by the SMF to the UE, and includes a PDU session release command. If a user plane of the PDU session is active, the N1 session management container includes the N2 resource release request, and the N2 resource release request is information sent by the SMF to the RAN.

Optionally, if the UPF selected by the SMF is a UPF deployed on a same satellite as the RAN that serves the UE, the SMF includes signaling optimization indication information in the N2 resource release request, to indicate the RAN to perform signaling optimization.

Step 702b: For the scenarios of step 701b and step 701e, the SMF sends a transmission message to the AMF, where the transmission message includes an N1 session management container, and optionally includes an N2 resource release request. For specific related descriptions of the N1 session management container, refer to the content in step 702a. Details are not described herein again.

Step 702c: For the scenario of step 701c, the SMF sends a session management context release response message to the AMF, and the AMF and the SMF remove contexts of all PDU sessions. In this case, the following step 703 to step 712 are not performed.

Step 703: The AMF forwards, to the RAN by using an N2 resource release request message, the information received from the SMF.

Step 704: The RAN interacts with the UE to release an access network resource. In this process, the RAN forwards the received PDU session release command to the UE.

Step 705: The RAN exchanges information with the UPF to release the PDU session (namely, an N4 session).

Optionally, if the RAN receives the signaling optimization indication information from the SMF, the RAN determines that the RAN needs to exchange information with the UPF to release the N4 session.

In a possible implementation, if the RAN and the UPF are co-deployed on a same satellite, the RAN and the UPF release the N4 session through internal implementation.

In another possible implementation, if the RAN and the UPF are independently deployed on a same satellite, the RAN indicates the UPF to release the N4 session and the like.

Step 706: The RAN sends an N2 resource release acknowledgment message to the AMF. The N2 resource release acknowledgment message includes N2 session management resource release acknowledgment information. The N2 session management resource release acknowledgment information is information sent by the RAN to the SMF.

Optionally, if the RAN receives the signaling optimization indication information from the SMF, and has completed interaction with the UPF, the RAN includes N4 session release indication information in the N2 resource release acknowledgment message, to indicate that N4 session release is completed.

Step 707: The AMF sends a session management context update request message to the SMF, where the session management context update request message includes the N2 session management resource release acknowledgment information sent by the RAN.

Step 708: The SMF sends a session management context update response message to the AMF.

Step 709: The UE sends a NAS message to the RAN, where the NAS message includes a PDU session identifier and an N1 session management response container (N1 session management response information). The N1 session management response container includes a PDU session release acknowledgment.

Step 710: The RAN forwards the received NAS message to the AMF.

Step 711: The AMF sends the received N1 session management response container to the SMF by using a session management context update message.

Optionally, step 709 to step 711 may occur before step 706 to step 708.

Step 712: For the scenario of 702a or 702b, after the SMF waits for a response made by the AMF to N1 and N2 related information, the SMF notifies the AMF that a corresponding PDU session context has been released.

Step 713: The SMF may invoke a session management policy association termination procedure.

Step 714: The SMF notifies an entity that has subscribed to a PDU session change.

Step 715: The SMF may unsubscribe from a change of session management subscription data.

Step 716: The SMF deregisters the PDU session.

According to the examples shown in FIG. 5A and FIG. 5B to FIG. 7A and FIG. 7B, some communication processes between the SMF and the UPF can be omitted, in other words, communication between a device on a satellite and a device on the ground can be reduced, so that a service delay is reduced, and user experience is improved.

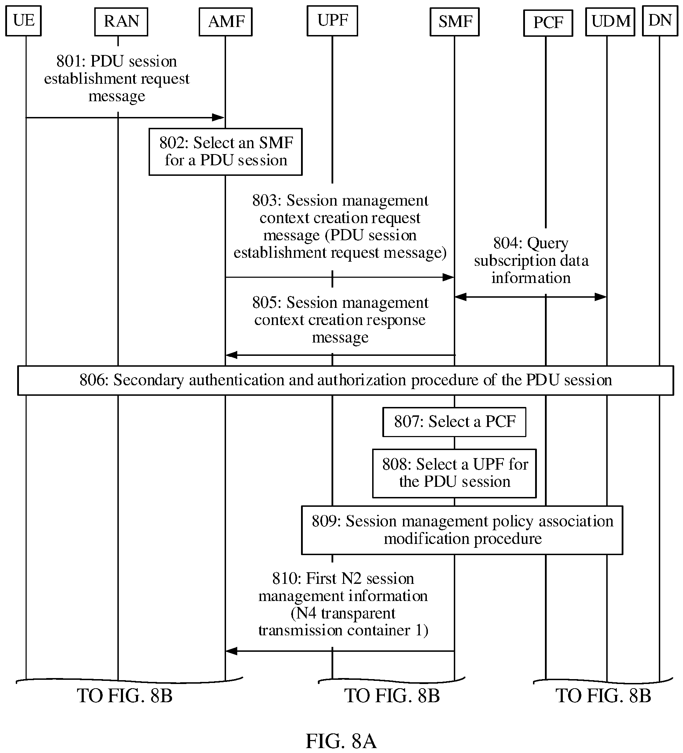

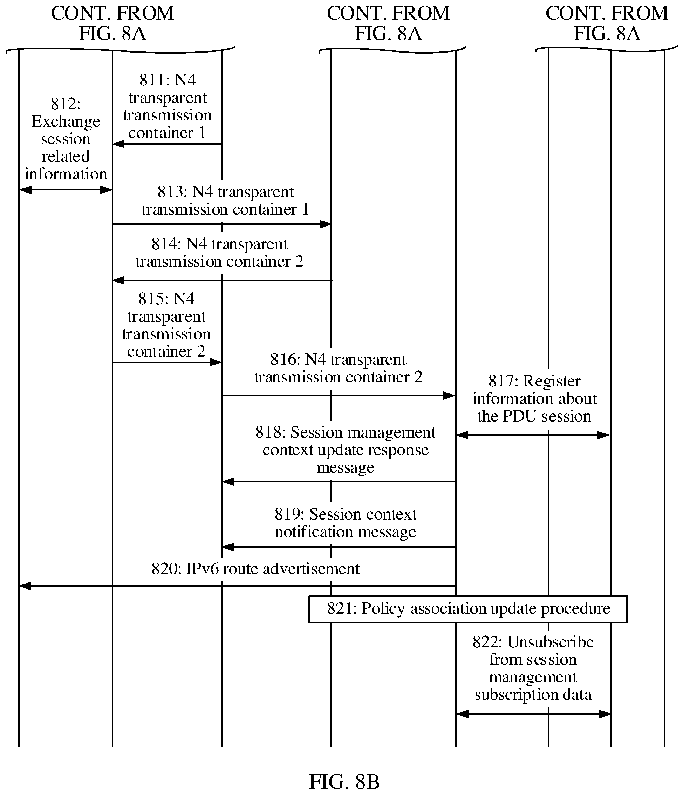

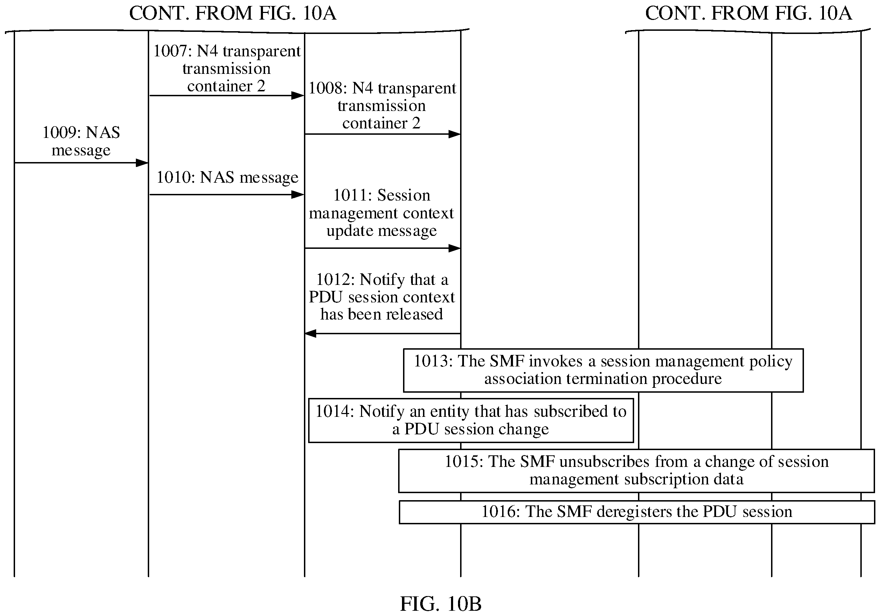

In another scenario, if the SMF determines that the UPF that serves a PDU session of the UE and the RAN that serves the UE are deployed on a same satellite, the SMF sends, to the UPF through an N2 interface, signaling (namely, N4 interface signaling) for configuring, updating, or deleting a rule, a resource, or the like on the UPF. The following uses examples shown in FIG. 8A and FIG. 8B to FIG. 10A and FIG. 10B for description. The following FIG. 8A and FIG. 8B to FIG. 10A and FIG. 10B are also described by using an example in which the UPF that serves the PDU session of the UE and the RAN that serves the UE are deployed on a same satellite and the SMF is deployed on a ground side.

FIG. 8A and FIG. 8B show an example of a communication method. In this example, the communication method provided in this embodiment of this application is described in detail with reference to a session establishment procedure. A specific procedure of the example may include the following steps.

Step 801 to step 809 are similar to step 501 to step 509 in the example shown in FIG. 5A and FIG. 5B, and reference may be made to each other. Details are not described herein again.

If the co-located user plane information provided by the AMF includes intra-satellite co-deployment indication information, and the UPF selected by the SMF is a UPF deployed on a same satellite as the RAN that serves the UE, the SMF does not initiate the N4 session establishment procedure or the N4 session modification procedure, in other words, the procedures corresponding to step 510 and step 511 in the example shown in FIG. 5A and FIG. 5B are not performed. In other words, the foregoing procedures are not performed after the method in this application is used. The foregoing steps that are not performed are not shown in FIG. 8A and FIG. 8B.

Step 810: The SMF sends first N2 session management information to the AMF, where the first N2 session management information includes an N4 transparent transmission container 1 (namely, the foregoing first N4 session management information). The N4 transparent transmission container 1 includes an N4 session request message, where the N4 session request message is for requesting the UPF to configure various N4 rules.

Step 811: The AMF forwards the received N4 transparent transmission container 1 to the RAN.

Step 812 is similar to step 514 in the example shown in FIG. 5A and FIG. 5B, and reference may be made to each other. Details are not described herein again.

Step 813: The RAN sends the received N4 transparent transmission container 1 to the UPF.

Step 814: The UPF generates an N4 session establishment response message; and sends, to the RAN, an N4 transparent transmission container 2 (namely, second information) including the N4 session establishment response message, where the N4 transparent transmission container 2 indicates that an N4 session has been established and tunnel information has been set. Optionally, the RAN provides the access network tunnel information while providing the N4 transparent transmission container 1 for the UPF.

In a possible implementation, if the RAN and the UPF are co-deployed on a same satellite, the RAN sends the N4 transparent transmission container 1 to the UPF through internal implementation, and the UPF sends the N4 transparent transmission container 2 used as a response to the RAN through internal implementation.

In another possible implementation, if the RAN and the UPF are independently deployed on a same satellite, the RAN sends the information about the allocated access network tunnel and the received N4 transparent transmission container 1 to the UPF, and the UPF sends the N4 transparent transmission container 2 used as a response to the RAN.

Step 815: The RAN sends the N4 transparent transmission container 2 (namely, the foregoing second information) to the AMF.

Step 816: The AMF sends the received N4 transparent transmission container 2 to the SMF.

Currently, in a standard procedure, after receiving the access network tunnel information provided by the RAN, the SMF provides the access network tunnel information for the UPF. However, in this application, if the SMF receives the N4 transparent transmission container 2 from the UPF, and the N4 transparent transmission container 2 indicates that the N4 session has been established and the tunnel information has been set, the SMF does not perform the operation in the standard procedure, to be specific, does not provide the access network tunnel information for the UPF. Therefore, this step is not shown in FIG. 8A and FIG. 8B.

Step 817 to step 822 are similar to step 518 to step 523 in the example shown in FIG. 5A and FIG. 5B, and reference may be made to each other. Details are not described herein again.

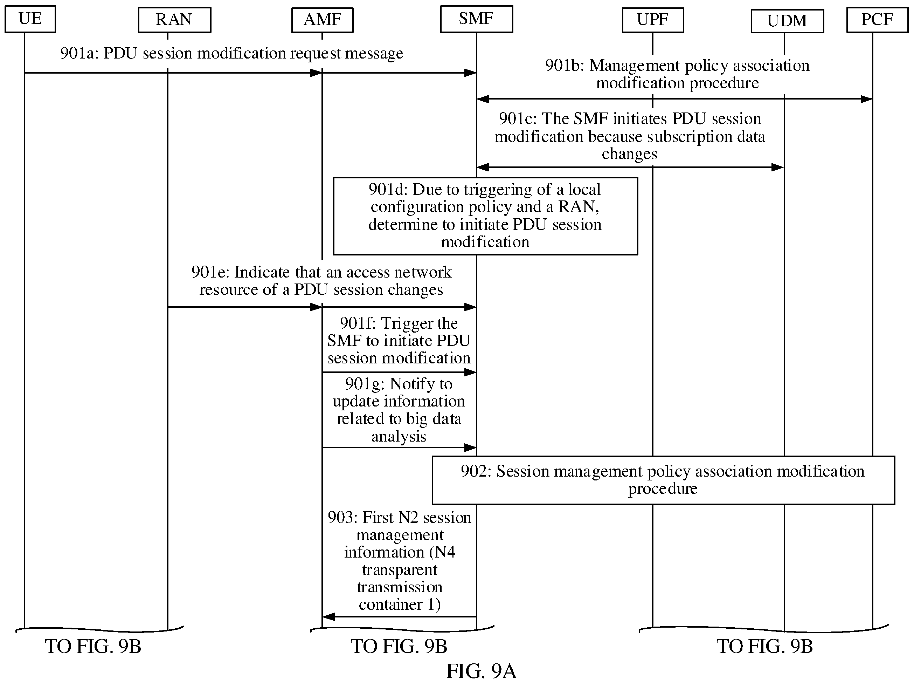

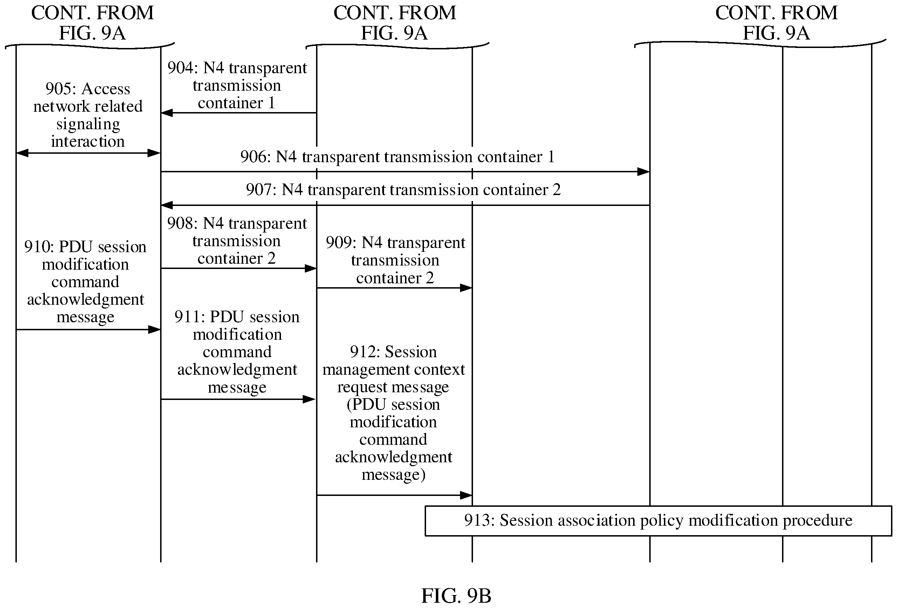

FIG. 9A and FIG. 9B show an example of another communication method. In this example, the communication method provided in this embodiment of this application is described in detail with reference to a PDU session modification procedure. A specific procedure of the example may include the following steps.

Step 901a to step 902 are similar to step 601a to step 602 in the example shown in FIG. 6A and FIG. 6B, and reference may be made to each other. Details are not described herein again.

After step 902, if a UPF used for the PDU session is a UPF deployed on a same satellite as the RAN that serves the UE, the following step 903 is directly performed.

In a possible implementation, the SMF determines, based on the co-located user plane information sent by the AMF, that the UPF used for the PDU session is a UPF deployed on a same satellite as the RAN that serves the UE.

In another possible implementation, the SMF determines, in a session establishment process, that the UPF used for the PDU session is a UPF deployed on a same satellite as the RAN that serves the UE, and stores the information.

If the UPF used for the PDU session is not a UPF deployed on a same satellite as the RAN that serves the UE, when the SMF determines to modify the PDU session, the following steps are further performed: The SMF may update an N4 rule related to new or modified QoS (herein, a rule related to uplink data is mainly modified herein), and send an N4 session modification request message to the UPF. After receiving the N4 session modification request message, the UPF updates a corresponding rule. In other words, the foregoing two steps are not performed after the method in this application is used. The two steps are not shown in FIG. 9A and FIG. 9B.

Step 903: The SMF sends first N2 session management information to the AMF, where the first N2 session management information includes an N4 transparent transmission container 1 (namely, the foregoing first N4 session management information). The N4 transparent transmission container 1 includes an N4 session modification request message, where the N4 session modification request message is for requesting the UPF to update various N4 rules.

Step 904: The AMF forwards the received N4 transparent transmission container 1 to the RAN.

Step 905 is similar to step 605 in the example shown in FIG. 6A and FIG. 6B, and reference may be made to each other. Details are not described herein again.

Step 906: The RAN sends the received N4 transparent transmission container 1 to the UPF.

Step 907: The UPF generates an N4 session modification response message; and sends, to the RAN, an N4 transparent transmission container 2 including the N4 session modification response message, where the N4 transparent transmission container 2 indicates that an N4 session has been updated.

In a possible implementation, if the RAN and the UPF are co-deployed on a same satellite, the RAN sends the N4 transparent transmission container 1 to the UPF through internal implementation, and the UPF sends the N4 transparent transmission container 2 used as a response to the RAN through internal implementation.

In another possible implementation, if the RAN and the UPF are independently deployed on a same satellite, the RAN sends the received N4 transparent transmission container 1 to the UPF, and the UPF sends the N4 transparent transmission container 2 used as a response to the RAN.

Step 908: The RAN sends the N4 transparent transmission container 2 (namely, the foregoing second information) to the AMF.

Step 909: The AMF sends the N4 transparent transmission container 2 to the SMF.

Currently, in a standard procedure, after receiving the access network tunnel information provided by the RAN, the SMF provides the access network tunnel information for the UPF. In this application, if the SMF receives the N4 transparent transmission container 2 from the UPF, and the N4 transparent transmission container 2 indicates that the N4 session has been updated, the SMF does not perform the operation in the standard procedure, to be specific, does not provide the access network tunnel information for the UPF. Therefore, this step is not shown in FIG. 9A and FIG. 9B.

Step 910 to step 913 are similar to step 610 to step 613 in the example shown in FIG. 6A and FIG. 6B, and reference may be made to each other. Details are not described herein again.

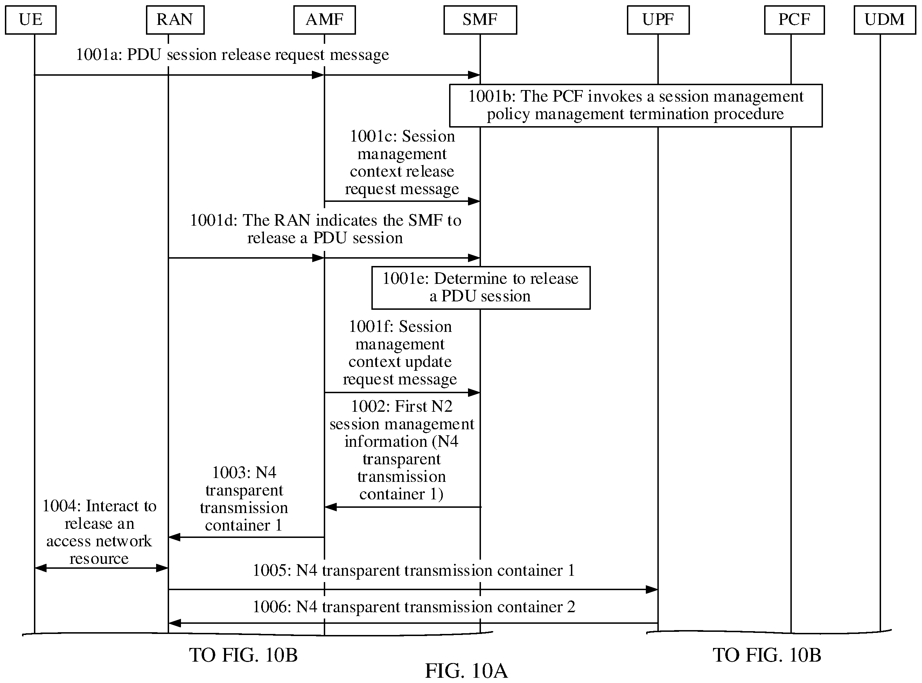

FIG. 10A and FIG. 10B show an example of another communication method. In this example, the communication method provided in this embodiment of this application is described in detail with reference to a PDU session release procedure. A specific procedure of the example may include the following steps.

Step 1001a to step 1001f are similar to step 701a to step 701f in the example shown in FIG. 7A and FIG. 7B, and reference may be made to each other. Details are not described herein again.

If a UPF used for the PDU session is a UPF deployed on a same satellite as the RAN that serves the UE, when the SMF determines that the PDU session needs to be released, the following step 1002 continues to be performed.

In a possible implementation, the SMF determines, based on the co-located user plane information sent by the AMF, that the UPF used for the PDU session is a UPF deployed on a same satellite as the RAN that serves the UE.

In another possible implementation, the SMF determines, in a session establishment process, that the UPF used for the PDU session is a UPF deployed on a same satellite as the RAN that serves the UE, and stores the information.

In other words, if the UPF used for the PDU session is a UPF not deployed on a same satellite as the RAN that serves the UE, when the SMF determines that the PDU session needs to be released, the following steps are performed according to an existing standard procedure: The SMF sends an N4 session release request message to the UPF. The UPF sends an N4 session release response message to the SMF. After receiving the request, the UPF discards a data packet of the PDU session, and releases a tunnel resource and an N4 session related context. In other words, the foregoing steps are not performed after the method provided in this application is used. The two steps are not shown in FIG. 10A and FIG. 10B.

Step 1002: The SMF sends first N2 session management information to the AMF, where the first N2 session management information includes an N4 transparent transmission container 1 (namely, the foregoing first N4 session management information). The N4 transparent transmission container 1 includes an N4 session release request message, where the N4 session release request message is for releasing an N4 rule.

Step 1003: The AMF forwards the received N4 transparent transmission container 1 to the RAN.

Step 1004 is similar to step 704 in the example shown in FIG. 7A and FIG. 7B, and reference may be made to each other. Details are not described herein again.

Step 1005: The RAN sends the received N4 transparent transmission container 1 to the UPF.

Step 1006: The UPF generates an N4 session release response message; and sends, to the RAN, an N4 transparent transmission container 2 including the N4 session release response message, where the N4 transparent transmission container 2 indicates that an N4 session has been released.

In a possible implementation, if the RAN and the UPF are co-deployed on a same satellite, the RAN sends the N4 transparent transmission container 1 to the UPF through internal implementation, and the UPF sends the N4 transparent transmission container 2 used as a response to the RAN through internal implementation.

In another possible implementation, if the RAN and the UPF are independently deployed on a same satellite, the RAN sends the received N4 transparent transmission container 1 to the UPF, and the UPF sends the N4 transparent transmission container 2 used as a response to the RAN.

Step 1007: The RAN sends the N4 transparent transmission container 2 to the AMF.

Step 1008: The AMF sends the N4 transparent transmission container 2 to the SMF.

Step 1009 to step 1016 are similar to step 709 to step 716 in the example shown in FIG. 7A and FIG. 7B, and reference may be made to each other. Details are not described herein again.

According to the examples shown in FIG. 8A and FIG. 8B to FIG. 10A and FIG. 10B, some communication processes between the SMF and the UPF can be omitted, in other words, communication between a device on a satellite and a device on the ground can be reduced, so that a service delay is reduced, and user experience is improved.

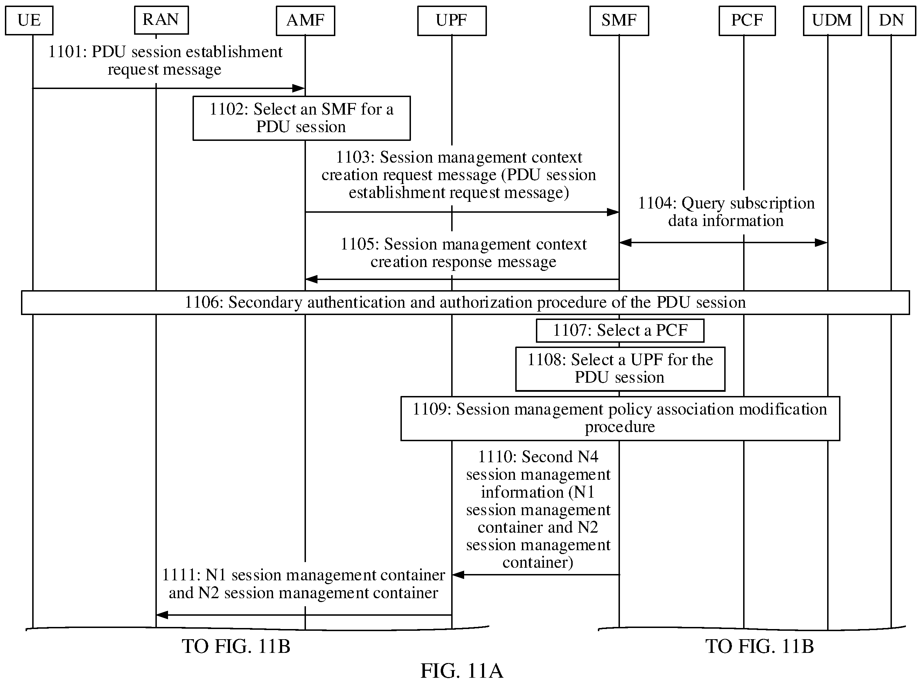

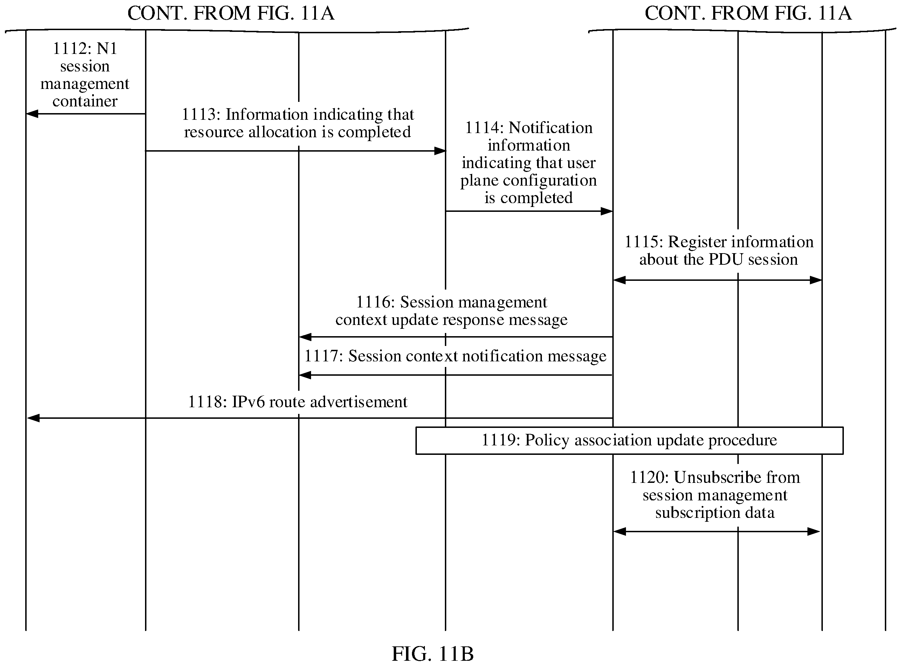

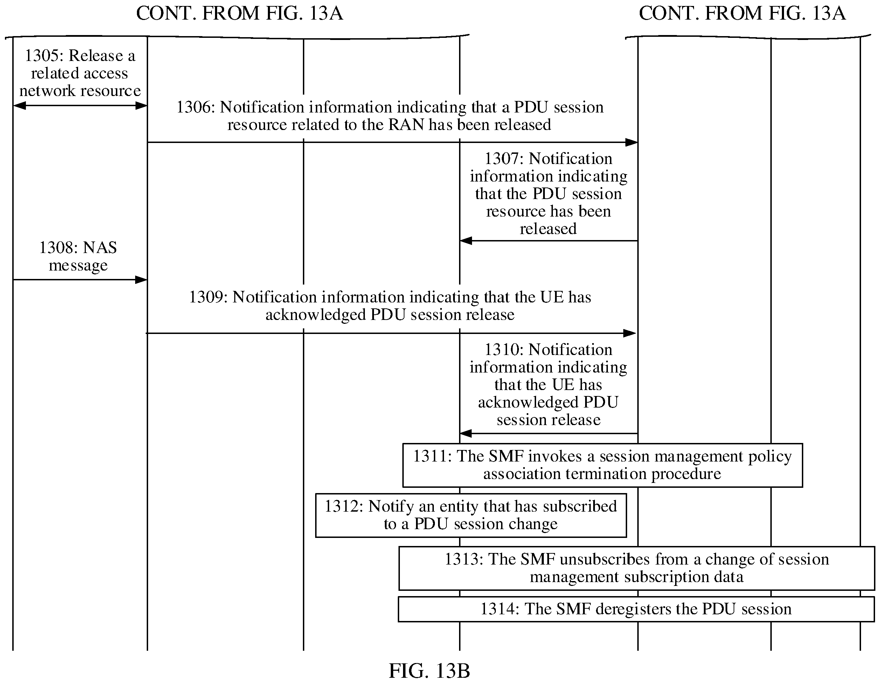

In still another scenario, if the SMF determines that the UPF that serves a PDU session of the UE and the RAN that serves the UE are deployed on a same satellite, the SMF sends, to the RAN and the UE through an N4 interface, signaling (namely, N1 and N2 interface signaling) to be sent to the RAN and the UE. The following uses examples shown in FIG. 11A and FIG. 11B to FIG. 13A and FIG. 13B for description. The following FIG. 11A and FIG. 11B to FIG. 13A and FIG. 13B are also described by using an example in which the UPF that serves the PDU session of the UE and the RAN that serves the UE are deployed on a same satellite and the SMF is deployed on a ground side.

FIG. 11A and FIG. 11B show an example of a communication method. In this example, the communication method provided in this embodiment of this application is described in detail with reference to a session establishment procedure. A specific procedure of the example may include the following steps.

Step 1101 to step 1109 are similar to step 501 to step 509 in the example shown in FIG. 5A and FIG. 5B, and reference may be made to each other. Details are not described herein again.

Step 1110: The SMF sends second N4 session management information to the UPF, where the second N4 session management information includes an N1 session management container (namely, the foregoing N1 session management information) and an N2 session management container (namely, the foregoing second N2 session management information). The N2 session management container does not include core network tunnel information.

Step 1111: The UPF forwards the received N1 session management container and N2 session management container to the RAN. Optionally, the UPF provides the core network tunnel information for the RAN.

In a possible implementation, if the RAN and the UPF are co-deployed on a same satellite, the UPF sends the N1 session management container and the N2 session management container to the RAN through internal implementation.

In another possible implementation, if the RAN and the UPF are independently deployed on a same satellite, the UPF sends the received N1 session management container and N2 session management container to the RAN.

Step 1112: The RAN sends the received N1 session management container to the UE, and establishes a corresponding resource.

Step 1113: After allocating the resource, the RAN sends, to the UPF, information indicating that resource allocation is completed.

In a possible implementation, if the RAN and the UPF are co-deployed on a same satellite, the RAN sends the information to the RAN through internal implementation.

In another possible implementation, if the RAN and the UPF are independently deployed on a same satellite, the RAN sends the information through an interface between the RAN and the UPF.

Step 1114: The UPF sends, to the SMF, notification information indicating that user plane configuration is completed.

Step 1115 to step 1120 are similar to step 518 to step 523 in the example shown in FIG. 5A and FIG. 5B, and reference may be made to each other. Details are not described herein again.

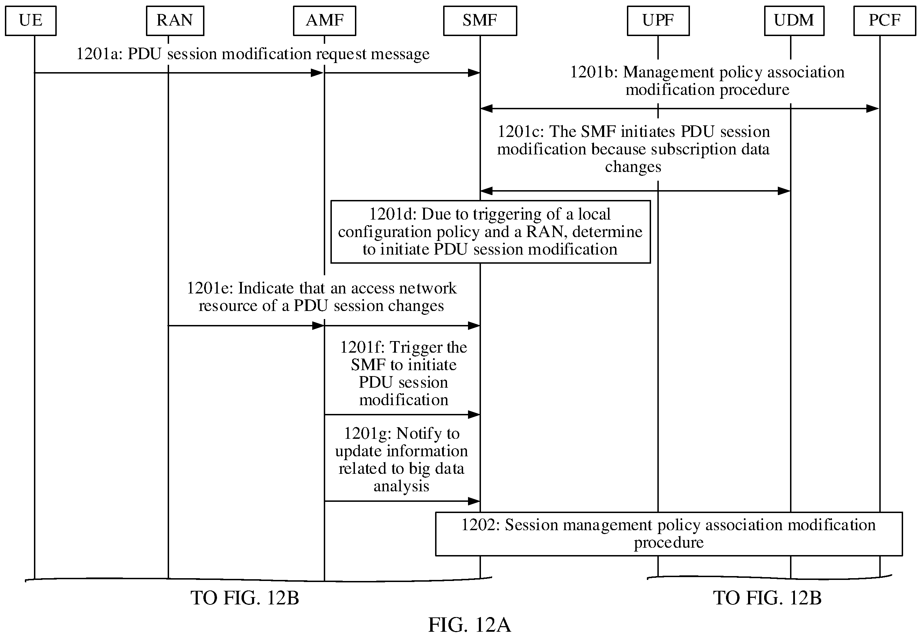

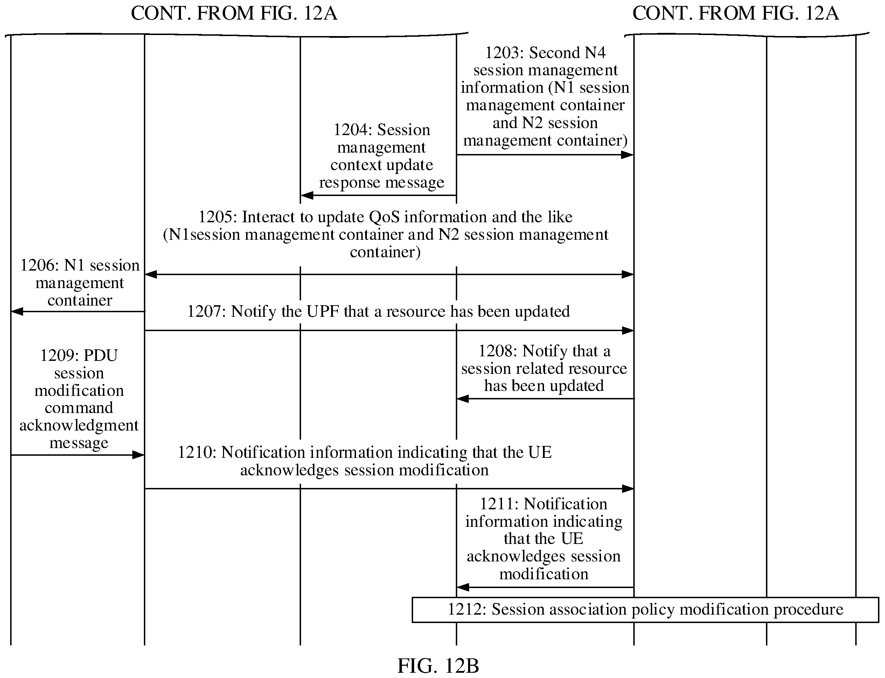

FIG. 12A and FIG. 12B show an example of another communication method. In this example, the communication method provided in this embodiment of this application is described in detail with reference to a PDU session modification procedure. A specific procedure of the example may include the following steps.

Step 1201a to step 1202 are similar to step 601a to step 602 in the example shown in FIG. 6A and FIG. 6B, and reference may be made to each other. Details are not described herein again.

Step 1203: The SMF sends second N4 session management information to the UPF, where the second N4 session management information includes an N1 session management container (namely, the foregoing N1 session management information) and an N2 session management container (namely, the foregoing second N2 session management information).

In other words, unlike an existing manner in which the SMF sends the N1 session management information and the N2 session management information to the AMF, in this application, the SMF sends the N1 session management information and the N2 session management information to the UPF.

Step 1204: The SMF sends a session management context update response message to the AMF.

It should be noted that the session management context update response message does not include the N1 session management information or the N2 session management information.

Step 1205: The UPF interacts with the RAN to update QoS information and the like. The UPF sends the received N1 session management container and N2 session management container to the RAN. For specific interaction between the UPF and the RAN, refer to related descriptions in the foregoing embodiments. Details are not described herein again.

Step 1206: The RAN updates a session resource. In this process, the RAN sends the received N1 session management container to the UE.

Step 1207: After completing resource update, the RAN notifies the UPF that the resource has been updated.

Step 1208: The UPF notifies the SMF that the session related resource has been updated (in other words, the UPF sends, to the SMF, notification information indicating that the RAN has completed processing a context of the PDU session).

Step 1209 is similar to step 610 in the example shown in FIG. 6A and FIG. 6B, and reference may be made to each other. Details are not described herein again.

Step 1210: The RAN sends, to the UPF, notification information indicating that the UE acknowledges session modification.

Step 1211: The UPF sends, to the SMF, the notification information indicating that the UE acknowledges session modification (in other words, the UPF sends, to the SMF, notification information indicating that the UE has completed processing the context of the PDU session).

Step 1212 is similar to step 613 in the example shown in FIG. 6A and FIG. 6B, and reference may be made to each other. Details are not described herein again.

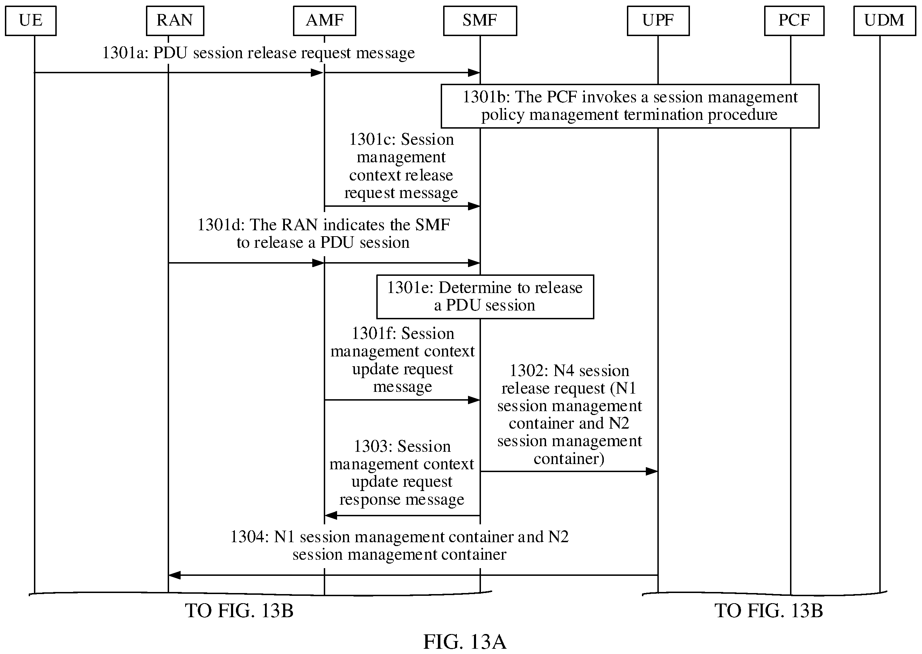

FIG. 13A and FIG. 13B show an example of another communication method. In this example, the communication method provided in this embodiment of this application is described in detail with reference to a PDU session release procedure. A specific procedure of the example may include the following steps.

Step 1301a to step 1301f are similar to step 701a to step 701f in the example shown in FIG. 7A and FIG. 7B, and reference may be made to each other. Details are not described herein again.

Step 1302: The SMF sends an N4 session release request (namely, the foregoing second N4 session management information) to the UPF, where the N4 session release request includes an N1 session management container (namely, the foregoing N1 session management information) and an N2 session management container (namely, the foregoing second N2 session management information).

Step 1303: The SMF sends a session management context update request response message to the AMF. It should be noted that the session management context update request response message does not include the N1 session management container or the N2 session management container.

Step 1304: The UPF sends the received N1 session management container and N2 session management container to the RAN.

Step 1305: The RAN releases a related access network resource.

Step 1306: The RAN sends, to the UPF, notification information indicating that a PDU session resource related to the RAN has been released.

Step 1307: The UPF sends, to the SMF, the notification information indicating that the PDU session resource has been released (in other words, the UPF sends, to the SMF, notification information indicating that the RAN has completed processing a context of the PDU session).

Step 1308 is similar to step 709 in the example shown in FIG. 7A and FIG. 7B, and reference may be made to each other. Details are not described herein again.

Step 1309: The RAN sends, to the UPF, notification information indicating that the UE has acknowledged PDU session release.

Step 1310: The UPF sends, to the SMF, the notification information indicating that the UE has acknowledged PDU session release (in other words, the UPF sends, to the SMF, notification information indicating that the UE has completed processing the context of the PDU session).

Step 1311 to step 1314 are similar to step 713 to step 716 in the example shown in FIG. 7A and FIG. 7B, and reference may be made to each other. Details are not described herein again.

According to the examples shown in FIG. 11A and FIG. 11B to FIG. 13A and FIG. 13B, some communication processes between the AMF and the RAN can be omitted, in other words, less communication is performed between a device on a satellite and a device on the ground, so that a service delay is reduced, and user experience is improved.

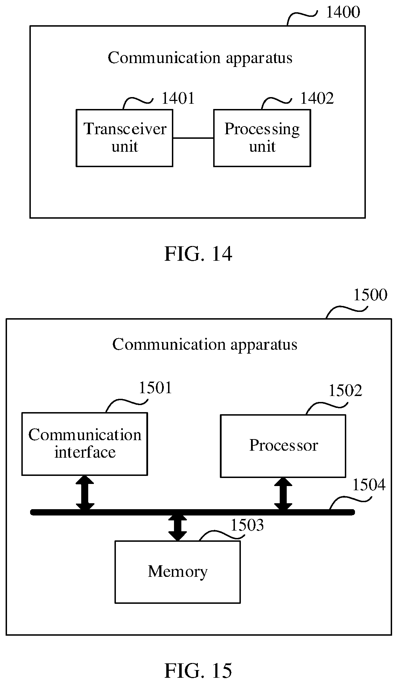

Based on the foregoing embodiments, an embodiment of this application further provides a communication apparatus. Referring to FIG. 14, a communication apparatus 1400 may include a transceiver unit 1401 (which may also be referred to as a communication unit 1401) and a processing unit 1402. The transceiver unit 1401 is used by the communication apparatus 1400 to receive a message (information or data) or send a message (information or data), and the processing unit 1402 is configured to control and manage an action of the communication apparatus 1400. The processing unit 1402 may further control the step performed by the transceiver unit 1401.

For example, the communication apparatus 1400 may be specifically the session management function network element in the foregoing embodiments, or a processor, a chip, a chip system, a functional module, or the like in the session management function network element; or the communication apparatus 1400 may be specifically the user plane function network element in the foregoing embodiments, or a processor, a chip, a chip system, a functional module, or the like in the user plane function network element; or the communication apparatus 1400 may be specifically the access network device in the foregoing embodiments, or a processor, a chip, a chip system, a functional module, or the like in the access network device.

In an embodiment, when the communication apparatus 1400 is configured to implement functions of the session management function network element in the foregoing embodiments, the processing unit 1402 may be configured to determine that a user plane function network element and an access network device that serve a protocol data unit PDU session of a terminal device are deployed on a same satellite. The session management function network element is deployed on a ground side. The transceiver unit 1401 may be configured to send first session management information to the access network device, or the transceiver unit 1401 is configured to send second session management information to the user plane function network element. The first session management information includes first session information, and the first session information indicates the user plane function network element to process a context of the PDU session. The second session management information includes second session information and third session information, the second session information indicates the terminal device to process the context of the PDU session, and the third session information indicates the access network device to process the context of the PDU session.

In an optional implementation, when determining that the user plane function network element and the access network device that serve the PDU session of the terminal device are deployed on a same satellite, the processing unit 1402 may be configured to control the transceiver unit 1401 to receive first information from an access and mobility management function network element, where the first information indicates that the user plane function network element and the access network device that serve the PDU session of the terminal device are deployed on a same satellite; and determine, based on the first information, that the user plane function network element and the access network device that serve the PDU session of the terminal device are deployed on a same satellite.

For example, the first information may include one or more of the following: indication information indicating that the access network device and the user plane function network element are independently deployed on a same satellite, indication information indicating that the access network device and the user plane function network element are co-deployed on a same satellite, information about satellites on which the access network device and the user plane function network element are located, and information about the access network device or information about the user plane function network element.

In a possible manner, the transceiver unit 1401 may be further configured to: before sending the first session management information to the access network device, receive first capability information from the user plane function network element, where the first capability information indicates that the user plane function network element supports a capability of reducing interaction between the user plane function network element and the session management function network element.

The first session management information may further include the information about the user plane function network element. Further, the first session management information may further include signaling reduction indication information, and the signaling reduction indication information indicates the access network device to send the first session information to the user plane function network element.

In an optional manner, the transceiver unit 1401 may be further configured to: after sending the first session management information to the access network device, receive second information from the access network device, where the second information indicates that the user plane function network element has completed processing the context of the PDU session and the access network device has completed processing the context of the PDU session.

Optionally, the transceiver unit 1401 may be further configured to: after sending the second session management information to the user plane function network element, receive, from the user plane function network element, notification information indicating that the access network device has completed processing the context of the PDU session.

In an example, the transceiver unit 1401 may be further configured to: after sending the second session management information to the user plane function network element, receive, from the user plane function network element, notification information indicating that the terminal device has completed processing the context of the PDU session.

In another embodiment, when the communication apparatus 1400 is configured to implement functions of the access network device in the foregoing embodiments, the transceiver unit 1401 may be configured to: receive first session management information from a session management function network element, where the first session management information includes first session information, and the first session information indicates a user plane function network element to process a context of a PDU session of a terminal device; and send the first session management information to the user plane function network element. The processing unit 1402 may be configured to control the transceiver unit 1401 to perform the foregoing operations. The user plane function network element and the access network device are deployed on a same satellite, and the session management function network element is deployed on a ground side.

In an optional implementation, the transceiver unit 1401 may be further configured to send second capability information to an access and mobility management function network element, where the second capability information indicates that the access network device supports signaling interaction with the user plane function network element.

For example, the first session management information may further include information about the user plane function network element.

Optionally, the first session management information may further include signaling reduction indication information, and the signaling reduction indication information indicates the access network device to send the first session information to the user plane function network element.

In a possible manner, the transceiver unit 1401 may be further configured to: receive third information from the user plane function network element, where the third information indicates that the user plane function network element has completed processing the context of the PDU session; and send second information to the session management function network element, where the second information indicates that the user plane function network element has completed processing the context of the PDU session and the access network device has completed processing the context of the PDU session.

In another embodiment, when the communication apparatus 1400 is configured to implement functions of the user plane function network element in the foregoing embodiments, the transceiver unit 1401 may be configured to: receive second session management information from a session management function network element, where the second session management information includes second session information and third session information, the second session information indicates a terminal device to process a context of a PDU session, and the third session information indicates an access network device to process the context of the PDU session; and send the second session information and the third session information to the access network device. The processing unit 1402 may be configured to control the transceiver unit 1401 to perform the foregoing operations. The user plane function network element and the access network device are deployed on a same satellite, and the session management function network element is deployed on a ground side.

In an optional implementation, the transceiver unit 1401 may be further configured to send first capability information to the session management function network element, where the first capability information indicates that the user plane function network element supports a capability of reducing interaction between the user plane function network element and the session management function network element.

In a possible manner, the transceiver unit 1401 may be further configured to send, to the session management function network element, notification information indicating that the access network device has completed processing the context of the PDU session.

For example, the transceiver unit 1401 may be further configured to send, to the session management function network element, notification information indicating that the terminal device has completed processing the context of the PDU session.

It should be noted that in this embodiment of this application, division into the units is an example, and is merely logical function division. In actual implementation, another division manner may be used. Functional units in this embodiment of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. Referring to FIG. 15, a communication apparatus 1500 may include a communication interface 1501 and a processor 1502. Optionally, the communication apparatus 1500 may further include a memory 1503. The memory 1503 may be disposed inside the communication apparatus 1500, or may be disposed outside the communication apparatus 1500. The processor 1502 may control the communication interface 1501 to receive and send a message, information, data, or the like. The communication interface may be a transceiver or the like.

Specifically, the processor 1502 may be a central processing unit (central processing unit, CPU), a network processor (network processor, NP), or a combination of a CPU and an NP. The processor 1502 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The communication interface 1501, the processor 1502, and the memory 1503 are connected to each other. Optionally, the communication interface 1501, the processor 1502, and the memory 1503 are connected to each other through a bus 1504. The bus 1504 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 15, but this does not mean that there is only one bus or only one type of bus.

In an optional implementation, the memory 1503 is configured to store a program and the like. Specifically, the program may include program code, and the program code includes computer operation instructions. The memory 1503 may include a RAM, and may further include a non-volatile memory (non-volatile memory), for example, one or more magnetic disk memories. The processor 1502 executes an application program stored in the memory 1503 to implement the foregoing functions, so that functions of the communication apparatus 1500 are implemented.

For example, the communication apparatus 1500 may be the session management function network element in the foregoing embodiments, or may be the user plane function network element in the foregoing embodiments, or may be the access network device in the foregoing embodiments.

In an embodiment, when the communication apparatus 1500 implements functions of the session management function network element in the foregoing embodiments, the communication interface 1501 may implement sending and receiving operations performed by the session management function network element in the foregoing embodiments, and the processor 1502 may implement an operation, other than the sending and receiving operations, performed by the session management function network element in the foregoing embodiments. For detailed related descriptions, refer to related descriptions in the foregoing embodiments. Details are not described herein again.

In another embodiment, when the communication apparatus 1500 implements functions of the user plane function network element in the foregoing embodiments, the communication interface 1501 may implement sending and receiving operations performed by the user plane function network element in the foregoing embodiments, and the processor 1502 may implement an operation, other than the sending and receiving operations, performed by the user plane function network element in the foregoing embodiments. For detailed related descriptions, refer to related descriptions in the foregoing embodiments. Details are not described herein again.

In another embodiment, when the communication apparatus 1500 implements functions of the access network device in the foregoing embodiments, the communication interface 1501 may implement receiving and sending operations performed by the access network device in the foregoing embodiments, and the processor 1502 may implement an operation, other than the receiving and sending operations, performed by the access network device in the foregoing embodiments. For detailed related descriptions, refer to related descriptions in the foregoing embodiments. Details are not described herein again.

Based on the foregoing embodiments, an embodiment of this application provides a communication system. The communication system may include the terminal device, the session management function network element, the access network device, the user plane function network element, the access and mobility management function network element, and the like in the foregoing embodiments.

An embodiment of this application further provides a computer-readable storage medium. The computer-readable storage medium is configured to store a computer program. When the computer program is executed by a computer, the computer may implement functions of the session management function network element (for example, an SMF) in the embodiments described in FIG. 3 to FIG. 13A and FIG. 13B, or implement functions of the access network device (for example, a RAN) in the embodiments described in FIG. 3 to FIG. 13A and FIG. 13B, or implement functions of the user plane function network element (for example, a UPF) in the embodiments described in FIG. 3 to FIG. 13A and FIG. 13B.

An embodiment of this application further provides a computer program product. The computer program product is configured to store a computer program. When the computer program is executed by a computer, the computer may implement functions of the session management function network element (for example, an SMF) in the embodiments described in FIG. 3 to FIG. 13A and FIG. 13B, or implement functions of the access network device (for example, a RAN) in the embodiments described in FIG. 3 to FIG. 13A and FIG. 13B, or implement functions of the user plane function network element (for example, a UPF) in the embodiments described in FIG. 3 to FIG. 13A and FIG. 13B.

An embodiment of this application further provides a chip, including a processor. The processor is coupled to a memory, and is configured to invoke a program in the memory, so that the chip implements functions of the session management function network element (for example, an SMF) in the embodiments described in FIG. 3 to FIG. 13A and FIG. 13B, or implement functions of the access network device (for example, a RAN) in the embodiments described in FIG. 3 to FIG. 13A and FIG. 13B, or implement functions of the user plane function network element (for example, a UPF) in the embodiments described in FIG. 3 to FIG. 13A and FIG. 13B.

An embodiment of this application further provides a chip. The chip is coupled to a memory. The chip is configured to implement functions of the session management function network element (for example, an SMF) in the embodiments described in FIG. 3 to FIG. 13A and FIG. 13B, or implement functions of the access network device (for example, a RAN) in the embodiments described in FIG. 3 to FIG. 13A and FIG. 13B, or implement functions of the user plane function network element (for example, a UPF) in the embodiments described in FIG. 3 to FIG. 13A and FIG. 13B.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope of protection defined by the following claims of this application and their equivalent technologies.

## Claims

1. A communication method, comprising:
determining, by a session management function network element, that a user plane function network element and an access network device that serve a protocol data unit PDU session of a terminal device are deployed on a same satellite, wherein the session management function network element is deployed on a ground side; and
sending, by the session management function network element, first session management information to the access network device, or sending, by the session management function network element, second session management information to the user plane function network element, wherein
the first session management information comprises first session information, and the first session information indicates the user plane function network element to process a context of the PDU session; and the second session management information comprises second session information and third session information, the second session information indicates the terminal device to process the context of the PDU session, and the third session information indicates the access network device to process the context of the PDU session.

2. The method according to claim 1, wherein the determining, by a session management function network element, that a user plane function network element and an access network device that serve a protocol data unit PDU session of a terminal device are deployed on a same satellite comprises:
receiving, by the session management function network element, first information from an access and mobility management function network element, wherein the first information indicates that the user plane function network element and the access network device that serve the PDU session of the terminal device are deployed on a same satellite; and
determining, by the session management function network element based on the first information, that the user plane function network element and the access network device that serve the PDU session of the terminal device are deployed on a same satellite.

3. The method according to claim 2, wherein the first information comprises one or more of the following:
indication information indicating that the access network device and the user plane function network element are independently deployed on a same satellite;
indication information indicating that the access network device and the user plane function network element are co-deployed on a same satellite;
information about satellites on which the access network device and the user plane function network element are located; and
information about the access network device or information about the user plane function network element.

4. The method according to any one of claims 1 to 3, wherein before the sending, by the session management function network element, first session management information to the access network device, the method further comprises:
receiving, by the session management function network element, first capability information from the user plane function network element, wherein the first capability information indicates that the user plane function network element supports a capability of reducing interaction between the user plane function network element and the session management function network element.

5. The method according to any one of claims 1 to 4, wherein the first session management information further comprises the information about the user plane function network element.

6. The method according to any one of claims 1 to 5, wherein the first session management information further comprises signaling reduction indication information, and the signaling reduction indication information indicates the access network device to send the first session information to the user plane function network element.

7. The method according to any one of claims 1 to 6, wherein after the sending, by the session management function network element, first session management information to the access network device, the method further comprises:
receiving, by the session management function network element, second information from the access network device, wherein the second information indicates that the user plane function network element has completed processing the context of the PDU session and the access network device has completed processing the context of the PDU session.

8. The method according to any one of claims 1 to 3, wherein after the sending, by the session management function network element, second session management information to the user plane function network element, the method further comprises:
receiving, by the session management function network element from the user plane function network element, notification information indicating that the access network device has completed processing the context of the PDU session.

9. The method according to any one of claims 1 to 3 and 8, wherein after the sending, by the session management function network element, second session management information to the user plane function network element, the method further comprises:
receiving, by the session management function network element from the user plane function network element, notification information indicating that the terminal device has completed processing the context of the PDU session.

10. A communication method, comprising:
receiving, by an access network device, first session management information from a session management function network element, wherein the first session management information comprises first session information, and the first session information indicates a user plane function network element to process a context of a PDU session of a terminal device; and
sending, by the access network device, the first session information to the user plane function network element, wherein
the user plane function network element and the access network device are deployed on a same satellite, and the session management function network element is deployed on a ground side.

11. The method according to claim 10, wherein the method further comprises:
sending, by the access network device, second capability information to an access and mobility management function network element, wherein the second capability information indicates that the access network device supports signaling interaction with the user plane function network element.

12. The method according to claim 10 or 11, wherein the first session management information further comprises information about the user plane function network element.

13. The method according to any one of claims 10 to 12, wherein the first session management information further comprises signaling reduction indication information, and the signaling reduction indication information indicates the access network device to send the first session information to the user plane function network element.

14. The method according to any one of claims 10 to 13, wherein the method further comprises:
receiving, by the access network device, third information from the user plane function network element, wherein the third information indicates that the user plane function network element has completed processing the context of the PDU session; and
sending, by the access network device, second information to the session management function network element, wherein the second information indicates that the user plane function network element has completed processing the context of the PDU session and the access network device has completed processing the context of the PDU session.

15. A communication method, comprising:
receiving, by a user plane function network element, second session management information from a session management function network element, wherein the second session management information comprises second session information and third session information, the second session information indicates a terminal device to process a context of a PDU session, and the third session information indicates an access network device to process the context of the PDU session; and
sending, by the user plane function network element, the second session information and the third session information to the access network device, wherein
the user plane function network element and the access network device are deployed on a same satellite, and the session management function network element is deployed on a ground side.

16. The method according to claim 15, wherein before the receiving, by a user plane function network element, second session management information from a session management function network element, the method further comprises:
sending, by the user plane function network element, first capability information to the session management function network element, wherein the first capability information indicates that the user plane function network element supports a capability of reducing interaction between the user plane function network element and the session management function network element.

17. The method according to claim 15 or 16, wherein the method further comprises:
sending, by the user plane function network element to the session management function network element, notification information indicating that the access network device has completed processing the context of the PDU session.

18. The method according to any one of claims 15 to 17, wherein the method further comprises:
sending, by the user plane function network element to the session management function network element, notification information indicating that the terminal device has completed processing the context of the PDU session.

19. A communication apparatus, comprising a memory, a processor, and a communication interface, wherein
the memory is configured to store computer instructions;
the communication interface is configured to receive and send information or a message; and
the processor is coupled to the memory, and is configured to invoke the computer instructions in the memory, to perform the method according to any one of claims 1 to 9 by using the communication interface.

20. A communication apparatus, comprising a memory, a processor, and a communication interface, wherein
the memory is configured to store computer instructions;
the communication interface is configured to receive and send information or a message; and
the processor is coupled to the memory, and is configured to invoke the computer instructions in the memory, to perform the method according to any one of claims 10 to 14 by using the communication interface.

21. A communication apparatus, comprising a memory, a processor, and a communication interface, wherein
the memory is configured to store computer instructions;
the communication interface is configured to receive and send information or a message; and
the processor is coupled to the memory, and is configured to invoke the computer instructions in the memory, to perform the method according to any one of claims 15 to 18 by using the communication interface.

22. A computer-readable storage medium, wherein the computer-readable storage medium stores computer-executable instructions, and when the computer-executable instructions are invoked by a computer, the method according to any one of claims 1 to 9 is performed, or the method according to any one of claims 10 to 14 is performed, or the method according to any one of claims 15 to 18 is performed.

23. A computer program product, comprising instructions, wherein when the instructions run on a computer, the method according to any one of claims 1 to 9, the method according to any one of claims 10 to 14, or the method according to any one of claims 15 to 18 is performed.

24. A chip, wherein the chip is coupled to a memory, and is configured to read and execute program instructions stored in the memory, to implement the method according to any one of claims 1 to 9, or implement the method according to any one of claims 10 to 14, or implement the method according to any one of claims 15 to 18.

25. A communication system, wherein the communication system comprises a session management function network element and a user plane function network element, the session management function network element is configured to perform the method according to any one of claims 1 to 9, and the user plane function network element is configured to perform the method according to any one of claims 15 to 18.

26. A communication system, wherein the communication system comprises a session management function network element and an access network device, the session management function network element is configured to perform the method according to any one of claims 1 to 9, and the access network device is configured to perform the method according to any one of claims 10 to 14.
